(19) Europäisches Patentamt
European Patent Office
Office européen des brevets

(11) EP 0 609 718 B1

(12) **EUROPÄISCHE PATENTSCHRIFT**

(45) Veröffentlichungstag und Bekanntmachung des Hinweises auf die Patenterteilung:
**23.12.1998 Patentblatt 1998/52**

(51) Int Cl.6: **C08G 75/22**, C09D 5/03, G03G 9/08

(21) Anmeldenummer: **94100848.4**

(22) Anmeldetag: **21.01.1994**

(54) **Ringförmige Polysulfondiallylammoniumsalze**

Ammonium salts of cyclic diallylpolysulfones

Sels d'ammonium de diallylpolysulfones cycliques

(84) Benannte Vertragsstaaten:
**CH DE FR GB LI**

(30) Priorität: **30.01.1993 DE 4302644**

(43) Veröffentlichungstag der Anmeldung:
**10.08.1994 Patentblatt 1994/32**

(73) Patentinhaber: **Clariant GmbH**
**65929 Frankfurt am Main (DE)**

(72) Erfinder:
- **Baur, Rüdiger, Dr.**
  **D-65817 Eppstein/Taunus (DE)**
- **Macholdt, Hans-Tobias, Dr.**
  **D-64297 Darmstadt (DE)**
- **Theiss, Wilfried**
  **D-65439 Flörsheim/Main (DE)**

(56) Entgegenhaltungen:
**EP-A- 0 476 648**
**DE-A- 2 608 644**
**DE-A- 4 029 653**
**GB-A- 1 098 500**
**GB-A- 1 381 432**

- **CHEMICAL ABSTRACTS, vol. 101, no. 26, 24. Dezember 1984, Columbus, Ohio, US; abstract no. 238221b, Seite 487 ; & JP-A-59 033 176 (CANON) 22 Februar 1984**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung stammt aus dem technischen Gebiet der Ladungssteuermittel in Tonern und Entwicklern für elektrophotographische Aufzeichnungsverfahren sowie in Pulvern und Pulverlacken zur Oberflächenbeschichtung.

Bei elektrophotographischen Aufzeichnungsverfahren wird auf einem Photoleiter ein "latentes Ladungsbild" erzeugt. Dies erfolgt beispielsweise durch Aufladung eines Photoleiters durch eine Coronaentladung und anschließende bildmäßige Belichtung der elektrostatisch aufgeladenen Oberfläche des Photoleiters, wobei durch die Belichtung der Ladungsabfluß zur geerdeten Unterlage an den belichteten Stellen bewirkt wird.
Anschließend wird das so erzeugte "latente Ladungsbild" durch Aufbringen eines Toners entwickelt. Im nächsten Schritt wird der Toner vom Photoleiter auf beispielsweise Papier, Textilien, Folien oder Kunststoff übertragen und beispielsweise mittels Druck, Strahlung, Hitze oder Lösungsmitteleinwirkung fixiert. Der benutzte Photoleiter wird anschließend gereinigt und steht für einen neuen Aufzeichnungsvorgang zur Verfügung.

In zahlreichen Patentschriften wird die Optimierung von Tonern beschrieben, wobei der Einfluß des Tonerbindemittels (Variation von Harz/Harzkomponenten oder Wachs/Wachskomponenten), der Einfluß von Carriern (bei Zweikomponentenentwicklern) und von Magnetpigmenten (bei Einkomponentenentwicklern) untersucht werden.

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. In der Praxis ist dies insofern von zentraler Bedeutung, als daß der Toner im Entwicklergemisch, bevor er auf den Photoleiter übertragen wird, einer erheblichen Aktivierzeit ausgesetzt sein kann, da er teilweise über einen Zeitraum der Herstellung von bis zu mehreren tausend Kopien im Entwicklergemisch verbleibt. Darüberhinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Kopierern und Laserdruckern in Abhängigkeit vom Verfahrens- und Gerätetyp.

Um elektrophotographische Toner oder Entwickler mit entweder positiver oder negativer Aufladung zu erhalten, werden häufig sogenannte Ladungssteuermittel (auch Ladungskontrollmittel genannt) zugesetzt. Dabei ist neben dem Vorzeichen der Ladungssteuerung das Ausmaß des Steuereffektes von Bedeutung, da eine höhere Wirksamkeit eine geringere Einsatzmenge erlaubt. Da Tonerbindemittel in der Regel eine starke Abhängigkeit der Aufladung von der Aktivierzeit aufweisen, ist es Aufgabe eines Ladungssteuermittels, zum einen Vorzeichen und Höhe der Toneraufladung einzustellen und zum anderen der Aufladungsdrift des Tonerbindemittels entgegenzuwirken und für Konstanz der Toneraufladung zu sorgen.
Ladungssteuermittel, die nicht verhindern können, daß der Toner oder Entwickler bei längerer Gebrauchsdauer eine hohe Ladungsdrift zeigt (Alterung), die sogar bewirken kann, daß der Toner oder Entwickler eine Ladungsumkehr erfährt, sind daher für die Praxis ungeeignet.

Vollfarbkopierer und Laserdrucker arbeiten nach dem Prinzip der Trichromie, welches eine exakte Farbtonabstimmung der drei Grundfarben (Gelb, Cyan und Magenta) erforderlich macht. Geringste Farbtonverschiebungen auch nur einer der drei Grundfarben verlangt zwingend eine Farbtonverschiebung der beiden anderen Farben, um auch dann originalgetreue Vollfarbkopien und -drucke produzieren zu können.
Wegen dieser in Farbtonern erforderlichen präzisen Abstimmung der Coloristik der einzelnen Farbmittel aufeinander sind Ladungssteuermittel ohne Eigenfarbe ganz besonders wichtig.

Bei Farbtonern müssen die drei Toner Gelb, Cyan und Magenta neben den genau definierten farblichen Anforderungen auch hinsichtlich ihrer triboelektrischen Eigenschaften exakt aufeinander abgestimmt sein. Diese triboelektrische Abstimmung ist erforderlich, weil beim Vollfarbdruck oder bei der Vollfarbkopie aufeinanderfolgend die drei Farbtoner (oder vier Farbtoner, wenn Schwarz mit einbezogen wird) im selben Gerät übertragen werden müssen.

Von Farbmitteln ist bekannt, daß sie die triboelektrische Aufladung von Tonern teilweise nachhaltig beeinflussen können (H.-T. Macholdt, A. Sieber, Dyes & Pigments 9 (1988), 119-127). Wegen der unterschiedlichen triboelektrischen Effekte von Farbmitteln und des daraus resultierenden teilweise sehr ausgeprägten Einflusses auf die Toneraufladbarkeit ist es nicht möglich, die Farbmittel in eine einmal erstellte Tonerbasisrezeptur einfach hinzuzufügen. Vielmehr kann es notwendig werden, für jedes Farbmittel eine eigene Rezeptur zu erstellen, für welche Art und Menge des benötigten Ladungssteuermittels speziell zugeschnitten werden. Dieses Vorgehen ist entsprechend aufwendig und kommt bei Farbtonern für Prozeßfarbe (Trichromie) noch zusätzlich zu den bereits beschriebenen Schwierigkeiten hinzu.

Daher sind hochwirksame farblose Ladungssteuermittel erforderlich, die imstande sind, das unterschiedliche triboelektrische Verhalten verschiedener Farbmittel zu kompensieren und dem Toner die gewünschte Aufladung zu verleihen. Auf diese Art und Weise können triboelektrisch sehr unterschiedliche Farbmittel anhand einer einmal erstellten Tonerbasisrezeptur mit ein und demselben Ladungssteuermittel in den verschiedenen erforderlichen Tonern (Gelb, Cyan, Magenta und gegebenenfalls Schwarz) eingesetzt werden.

Darüberhinaus ist für die Praxis wichtig, daß die Ladungssteuermittel eine hohe Thermostabilität und eine gute Dispergierbarkeit besitzen. Typische Einarbeitungstemperaturen für Ladungssteuermittel in die Tonerharze liegen bei Verwendung von Knetern oder Extrudern zwischen 100°C und 200°C. Dementsprechend ist eine Thermostabilität von 200°C, besser noch 250°C, von großem Vorteil. Wichtig ist auch, daß die Thermostabilität über einen längeren Zeitraum (ca. 30 Minuten) und in verschiedenen Bindemittelsystemen gewährleistet ist. Dies ist bedeutsam, da immer wieder auftretende Matrixeffekte zum frühzeitigen Zersetzen des Ladungssteuermittels im Tonerharz führen, wodurch eine dunkelgelbe oder dunkelbraune Färbung des Tonerharzes erfolgt und der Ladungssteuereffekt ganz oder teilweise verloren geht. Typische Tonerbindemittel sind Polymerisations-, Polyadditions- und Polykondensationsharze wie Styrol-, Styrolacrylat-, Styrolbutadien-, Acrylat-, Polyester-, Phenol- und Epoxidharze, einzeln oder in Kombination, die noch weitere Inhaltsstoffe, wie Farbmittel, Wachse oder Fließhilfsmittel, enthalten können oder im Nachhinein zugesetzt bekommen können.
Für eine gute Dispergierbarkeit ist es von großem Vorteil, wenn das Ladungssteuermittel möglichst keine wachsartigen Eigenschaften, keine Klebrigkeit und einen Schmelz- oder Erweichungspunkt von > 150°C, besser > 200°C, aufweist. Eine Klebrigkeit führt häufig zu Problemen beim Zudosieren in die Tonerformulierung, und niedrige Schmelz- oder Erweichungspunkte können dazu führen, daß beim Eindispergieren keine homogene Verteilung erreicht wird, da sich das Material tröpfchenförmig im Trägermaterial zusammenschließt.

Außer in elektrophotographischen Tonern und Entwicklern können Ladungssteuermittel auch zur Verbesserung der elektrostatischen Aufladung von Pulvern und Lacken, insbesondere in triboelektrisch oder elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden. Die Pulverlacktechnologie kommt beispielsweise beim Lackieren von Kleingegenständen, wie Gartenmöbeln, Campingartikeln, Haushaltsgeräten, Fahrzeugteilen, Kühlschränken und Regalen, sowie beim Lackieren von kompliziert geformten Werkstücken zur Anwendung. Der Pulverlack oder das Pulver erhält seine elektrostatische Aufladung im allgemeinen nach einem der beiden folgenden Verfahren:

a) Beim Corona-Verfahren wird der Pulverlack oder das Pulver an einer geladenen Corona vorbeigeführt und hierbei aufgeladen,
b) beim triboelektrischen oder elektrokinetischen Verfahren wird vom Prinzip der Reibungselektrizität Gebrauch gemacht.

Der Pulverlack oder das Pulver erhalten im Sprühgerät eine elektrostatische Aufladung, die der Ladung des Reibungspartners, im allgemeinen ein Schlauch oder Sprührohr, beispielsweise aus Polytetrafluorethylen, entgegengesetzt ist. Auch eine Kombination von beiden Verfahren ist möglich.

Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.
Typische Härterkomponenten für Epoxidharze sind beispielsweise Säureanhydride, Imidazole sowie Dicyandiamid und deren Abkömmlinge. Für hydroxylgruppenhaltige Polyesterharze sind typische Härterkomponenten beispielsweise Säureanhydride, verkappte Isocyanate, Bisacylurethane, Phenolharze und Melaminharze. Für carboxylgruppenhaltige Polyesterharze sind typische Härterkomponenten beispielsweise Triglycidylisocyanurate oder Epoxidharze. In Acrylharzen kommen als typische Härterkomponenten beispielsweise Oxazoline, Isocyanate, Triglycidylisocyanurate oder Dicarbonsäuren zur Anwendung.
Der Nachteil einer ungenügenden Aufladung ist vor allem bei triboelektrisch oder elektrokinetisch versprühten Pulvern und Pulverlacken, die auf Basis von Polyesterharzen, insbesondere carboxylgruppenhaltigen Polyestern, oder auf der Basis von sogenannten Mischpulvern, auch Hybridpulver genannt, hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke. Ungenügende Aufladung der oben genannten Pulver und Pulverlacke führt dazu, daß Abscheidequote und Umgriff am zu beschichtenden Werkstück ungenügend sind. Der Ausdruck "Umgriff" ist ein Maß dafür, inwieweit sich ein Pulver oder Pulverlack am zu beschichtenden Werkstück auch an Rückseiten, Hohlräumen, Spalten und vor allem an Innenkanten und -ecken abscheidet.

Farblose Ladungssteuermittel werden in zahlreichen Patentschriften beansprucht. Allerdings weisen die bisher bekannten farblosen Ladungssteuermittel eine Reihe von Nachteilen auf, die den Einsatz in der Praxis stark einschränken und manchmal auch unmöglich machen. So weisen die in US-PS 4 656 112 beschriebenen Chrom-, Eisen-, Kobalt- und Zinkkomplexe neben der Schwermetallproblematik auch den Nachteil auf, daß sie teilweise nicht wirklich farblos sind, und somit in Farbtonern oder in weißen oder bunten Pulverlacken nur eingeschränkt Anwendung finden können. Die bekannten, an sich geeigneten, quaternären Ammoniumverbindungen sind häufig schwierig zu dispergieren, was

zu einer ungleichmäßigen Aufladung des Toners führt. Zudem tritt oft das Problem auf, daß die von diesen Verbindungen erzeugte Tonerladung nicht über einen längeren Aktivierzeitraum (bis zu 24 Stunden Aktivierdauer) hinweg stabil ist, insbesondere bei hoher Temperatur und Luftfeuchtigkeit, was dann im Verlaufe eines Kopier- oder Druckprozesses zur Anreicherung falsch oder nicht genügend aufgeladener Tonerteilchen führt und damit den Prozeß zum Erliegen bringt.

Ferner ist bekannt, daß Ladungssteuermittel auf Ammonium- und Immoniumbasis empfindlich gegen Licht oder mechanische Einwirkungen (US-PS 4 683 188) und thermisch labil sein können, und daß sie Zersetzungsprodukte bilden, die sich nachteilig auf die triboelektrische Aufladung des Toners auswirken können (US-PS 4 684 596) und/ oder eine starke, oft dunkelbraune, Eigenfarbe aufweisen. Darüberhinaus sind sie oft wachsartig, zum Teil wasserlöslich und/oder besitzen geringe Wirksamkeit als Ladungssteuermittel.

An sich geeignete Ladungssteuermittel auf Basis hochgradig fluorierter Ammonium- und Immoniumverbindungen (US-PS 5 069 994) haben den Nachteil einer aufwendigen Synthese, wodurch hohe Herstellungskosten für die entsprechenden Substanzen anfallen, und sind nicht ausreichend thermostabil. Phosphoniumsalze sind als Ladungssteuermittel weniger wirksam als Ammoniumsalze (US-PS 4 496 643) und können toxikologisch problematisch sein.

Ladungssteuermittel auf Basis polymerer Ammoniumverbindungen (DE-A-4 029 653) führen zum Teil zu Amingeruch des Toners oder Entwicklers, und die Ladungskontrolleigenschaften dieser Substanzen können sich durch relativ leichte Oxidation und Feuchtigkeitsaufnahme ändern. Des weiteren sind die Oxidationsprodukte gefärbt und daher störend vor allem in Farbtonern. Die vorstehend genannten Ladungssteuermittel für elektrophotographische Toner und Entwickler sind aufgrund ihrer Farbigkeit für den Einsatz in den überwiegend weißen oder klaren triboelektrisch oder elektrokinetisch versprühten Pulvern und Pulverlacken nicht geeignet. Des weiteren schränkt mangelnde Thermostabilität den Einsatz derartiger Ladungssteuermittel stark ein, da Pulverlacke beispielsweise bei über 200°C 15 Minuten lang eingebrannt werden. Die in US-PS 5 069 994 beanspruchten Ladungssteuermittel für Pulver und Pulverlacke sind aufgrund von Wachsartigkeit und Wasserlöslichkeit oder Hygroskopie schlecht zu handhaben und nur eingeschränkt anwendbar.

Die Aufgabe der vorliegenden Erfindung war es daher, verbesserte besonders wirksame farblose Ladungssteuermittel zu finden, wobei neben der Ladungshöhe das schnelle Erreichen und die Konstanz dieser Ladung gewährleistet sein muß und der Ladungssteuereffekt nicht empfindlich gegenüber Temperatur- und Luftfeuchtigkeits-Veränderungen sein darf. Darüberhinaus sollen diese Verbindungen in hohem Maße thermostabil sein, vor allem auch über einen längeren Zeitraum hinweg im jeweiligen Trägermaterial (Harz) sehr gut dispergierbar, schwerlöslich in Wasser oder wasserunlöslich sowie verträglich mit den Toner- und Pulverlackinhaltsstoffen sein. Des weiteren soll die Synthese der Verbindungen wenig aufwendig und ihre Herstellung kostengünstig sein.

Die Substanzen sollen zudem ökologischen und toxikologischen Anforderungen wie zum Beispiel Schwermetallfreiheit, insbesondere Chromfreiheit, genügen. Zusätzlich ist anzustreben, daß neuartige Verbindungen dieses Typs gleichbleibend effizient in den verschiedenen Anwendungsgebieten einsetzbar sind.

Es hat sich nun gezeigt, daß ausgewählte ringförmige Polysulfondiallylammoniumsalze überraschenderweise durch gezielte Kombination von Polysulfondiallylammonium-Kationen mit ausgewählten Anionen besonders hohe und konstante Ladungssteuereigenschaften, gute Thermostabilitäten und sehr gute Dispergierbarkeiten in unterschiedlichen Bindemitteln, wie zum Beispiel Polystyrolacrylaten oder Polyestern, besitzen.

Gegenstand der vorliegenden Erfindung ist die Verwendung von Polysulfondiallylammoniumsalzen, erhältlich durch

a) Copolymerisation von Salzen, vorzugsweise Halogeniden, monomerer Diallylammonium-Komponenten der Formel (I)

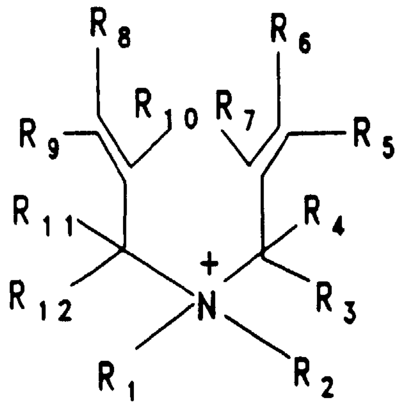

( I )

mit Schwefeldioxid oder einer Schwefeldioxid freisetzenden Verbindung und

b) Anionenaustausch, wobei die Anionen, vorzugsweise die Halogenidionen, der Diallylammonium-Komponenten durch die Anionen A vollständig oder teilweise ersetzt werden,

wobei die Diallylammonium-Komponenten jeweils zu einem fünf- oder sechsgliedrigen Ring cyclisiert sind und durch ein oder mehrere zweiwertige Reste $-SO_2-$ miteinander zu Polymeren verbunden sind,
wobei die Polysulfondiallylammoniumsalze ein Molekulargewicht zwischen 500 und 5.000.000 haben,
wobei das Verhältnis der Anzahl der Diallylammonium-Komponenten und der Anzahl der zweiwertigen $SO_2$-Reste 1:0,01 bis 1:100 beträgt,
wobei die Reste $R_1$ bis $R_{12}$ gleich oder verschieden sind und ein Wasserstoffatom, ein Halogenatom, einen Hydroxyl-Rest, einen primären, sekundären oder tertiären Amino-Rest, einen Carbonsäure- oder Carbonsäureester-Rest, einen Acylrest, einen Sulfonsäure- oder Sulfonsäureester-Rest, -Rest, einen Cyano- oder Nitro-Rest, einen Rest eines $C_1$-$C_{30}$-aliphatischen, $C_7$-$C_{60}$-araliphatischen oder $C_6$-$C_{30}$-aromatischen Kohlenwasserstoffes, der durch Heteroatome unterbrochen sein kann, bedeuten, und

A jeweils das stöchiometrische Anionenäquivalent eines Anions aus der Gruppe $NO_3^-$, $OH^-$, $HSO_4^-$, $SO_4^{2-}$, $HSO_3^-$, $S_2^-$, $S^{2-}$, $SO_3^{2-}$, $S_2O_3^{2-}$, $HCO_3^-$, $CO_3^{2-}$, $H_2PO_4^-$, $HPO_4^{2-}$, $PO_4^{3-}$, $CN^-$, $CF_3SO_3^-$, $CF_3COO^-$, Cyanat, Isocyanat, $F^-$, $Cl^-$, $Br^-$, $J^-$, Thiocyanat, Zinktetracyanat, Zinktetrathiocyanat, Perchlorat, $PF_6^-$, $MoO_4^{2-}$, $MoS_4^{2-}$, $WO_4^{2-}$, oder

eines Anions einer Heteropolysäure oder
eines Borats der allgemeinen Formel (II)

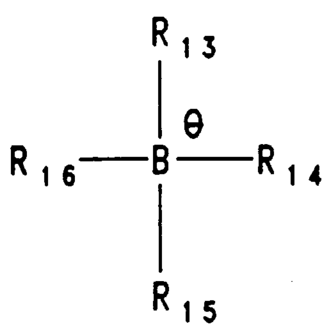

( I I )

wobei die Reste $R_{13}$ bis $R_{16}$ gleich oder verschieden sind und $C_1$-$C_{30}$-aliphatische, $C_3$-$C_{10}$-cycloaliphatische Reste, Aryl- oder Heteroaryl- oder Aralkylreste, wobei diese Reste durch Alkyl($C_1$-$C_4$)-, Alkoxy($C_1$-$C_4$)- oder Arylreste oder Halogenatome substituiert sein können, oder Fluoratome bedeuten;
oder eines Anions aus der Gruppe Phenolat, olefinisches, aliphatisches oder aromatisches Carboxylat, Thiolat, Sulfonat oder Sulfat, in denen die Alkyl-, Alkenyl- oder Arylreste auch perfluoriert sein können;

oder eines Disulfo-pyrrolidinium-betains der allgemeinen Formel (III)

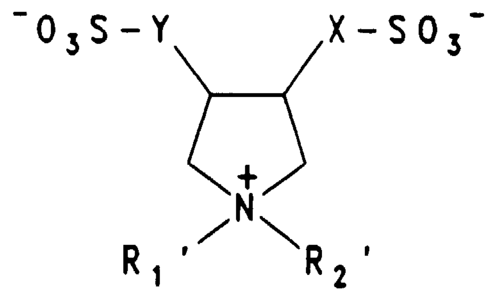

(III)

wobei $R_1$' und $R_2$' die für $R_1$ und $R_2$ genannten Bedeutungen haben und X und Y jeweils ein geradkettiger oder verzweigter aliphatischer, gesättigter oder ungesättigter Alkylen($C_1$-$C_{18}$)-Rest oder Alkoxylen($C_1$-$C_{18}$)-Rest ist;
oder A eine Kombination der vorstehend genannten Anionen bedeutet;
einzeln oder in Kombination als Ladungssteuermittel in elektrophotographischen Tonern und Entwicklern, die zum Kopieren und Vervielfältigen von Vorlagen sowie zum Drucken von elektronisch, magnetisch oder optisch gespeicherten Informationen oder im Colorproofing eingesetzt werden, sowie als Ladungssteuermittel in Pulvern und Pulverlakken.

Die erfindungsgemäß verwendeten Verbindungen sind geeignet als ladungsverbesserndes Mittel in Pulvern und Lacken zur Oberflächenbeschichtung von Gegenständen aus Metall, Holz, Kunststoff, Glas, Keramik, Beton, Textilmaterial, Papier oder Kautschuk, insbesondere in triboelektrisch oder elektrokinetisch versprühten Pulverlacken. Außerdem können die genannten Verbindungen auch als ladungsverbesserndes Mittel in Form von Beschichtungen von Carriern oder Bestandteil von Beschichtungen von Carriern, die in Entwicklern zum elektrophotographischen Kopieren oder Vervielfältigen von Vorlagen sowie zum Drucken von elektronisch, optisch oder magnetisch gespeicherten Informationen oder im Colorproofing zur Anwendung kommen, eingesetzt werden. Gegenstand der Erfindung ist auch die Verwendung eines Gemisches der genannten Verbindungen oder eines Mischkristalles mit gemischten Anionen und/oder Kationen zu den genannten Zwecken.

Als anorganische Anionen A sind für die erfindungsgemäße Verwendung beispielsweise von Interesse: $NO_3^-$, $OH^-$, $HSO_4^-$, $SO_4^{2-}$, $HSO_3^-$, $S_2^-$, $S^{2-}$, $SO_3^{2-}$, $S_2O_3^{2-}$, $HCO_3^-$, $CO_3^{2-}$, $H_2PO_4^-$, $HPO_4^{2-}$, $PO_4^{3-}$, $CN^-$, $CF_3SO_3^-$, $CF_3COO^-$, Cyanat, Isocyanat, $F^-$, $Cl^-$, $Br^-$, $J^-$, Thiocyanat, Zinktetracyanat, Zinktetrathiocyanat, Perchlorat, $PF_6^-$, Molybdate, wie $MoO_4^{2-}$, Thiomolybdate, wie $MoS_4^{2-}$, und Wolframate, wie $WO_4^{2-}$. Es kommt aber auch eine Kombination dieser Anionen in Frage, insbesondere auch in Kombination mit organischen Anionen, wie $HCOO^-$ oder $CH_3COO^-$, als Mischung oder als Mischkristall.

Als Anion einer Heteropolysäure sind beispielsweise von Interesse: Molybdatophosphate, wie $P(Mo_3O_{10})_4^{3-}$, Wolframatophosphate, wie $P(W_3O_{10})_4^{3-}$ und Silicomolybdate.

Als Borate sind beispielsweise von Interesse: Tetrafluoroborat, Tetrachloroborat, Tetraphenylborat, Tetra(fluorphenyl)borat, Tetra(chlorphenyl)borat, Tetratolylborat, Tetranaphthylborat, Tetra(methoxyphenyl)borat, Tetrabiphenylborat, Tetrabenzylborat, Tetra(perfluoroalkyl)phenylborat und Tetrapyridylborat, wobei die genannten aromatischen Reste in ortho-, meta- oder para-Position mit dem Boratom verbunden sein können.

Als organische Anionen A sind beispielsweise von Interesse: Ethylsulfat, Thiolat, Phenolat, Nitrophenolat, gesättigtes oder ungesättigtes aliphatisches, oder cycloaliphatisches oder aromatisches Carboxylat oder Sulfonat, vorzugsweise Formiat, Lactat, Tartrat, Benzoat, das Mono- oder Dianion der Dithiodibenzoesäure, 4,4'-Sulfonyldibenzoat, Phthalat, Terephthalat, Isophthalat, Sulfoisophthalat, Salicylat, 2-Hydroxy-3-naphthoat, 2-Hydroxy-6-naphthoat, Ethylsulfonat, Mono- oder Dimethylsulfat, Phenylsulfonat oder Tosylat, ferner perfluoriertes gesättigtes oder ungesättigtes aliphatisches oder cycloaliphatisches oder aromatisches Carboxylat oder Sulfonat, vorzugsweise Perfluoracetat, Perfluor($C_1$-$C_{30}$)-alkylbenzoat, Perfluorethylsulfonat oder Perfluor($C_1$-$C_{30}$)-alkylbenzolsulfonat, sowie gesättigtes oder ungesättigtes aliphatisches oder cycloaliphatisches oder aromatisches Di- und Tricarboxylat oder Di- und Trisulfonat, vorzugsweise Citrat, Oxalat und Succinat, chloriertes oder fluoriertes aliphatisches, cycloaliphatisches oder aromatisches Carboxylat, wie Trifluoracetat, und Trifluorsulfonat.

Als Disulfo-pyrrolidinium-betaine der allgemeinen Formel (III) sind solche von Interesse, bei denen $R_1$' und $R_2$' Wasserstoff, Alkyl($C_1$-$C_5$)- oder Alkoxy($C_1$-$C_5$)-Reste, Polyoxalkylen-Reste, bevorzugt Polyoxethylen- oder Polyoxpropylen-Reste, der allgemeinen Formel (Alkylen($C_1$-$C_5$)-O)n-R bedeuten, worin R ein Wasserstoffatom oder einen Alkyl ($C_1$-$C_4$)-Rest bedeutet und n eine Zahl von 1 bis 10 ist, und X und Y jeweils Alkylen($C_1$-$C_5$) bedeuten.

Besonders bevorzugt im Sinne der erfindungsgemäßen Verwendung sind Polysulfondiallylammoniumsalze, in de-

nen A die Bedeutung $CF_3SO_3^-$, $BF_4^-$, Halogenid, $B(Aryl)_4^-$, $PF_6^-$, $P(Mo_3O_{10})_4^{3-}$ oder eines Disulfo-pyrrolidinium-betains der Formel (III) hat oder das Mono- oder Dianion der Dithiobenzoesäure ist.

Besonders bevorzugt im Sinne der vorliegenden Erfindung sind weiterhin Polysulfondiallylammoniumsalze, in denen $R_1$ bis $R_{12}$ sowie gegebenenfalls $R_1'$ und $R_2'$ Wasserstoffatome, geradkettige oder verzweigte, gesättigte oder ungesättigte Alkyl($C_1$-$C_{18}$)-Reste, Polyoxalkylen-Reste, bevorzugt Polyoxethylen- und/oder Polyoxpropylen-Reste, der allgemeinen Formel (Alkylen($C_1$-$C_5$)-O)n-R, worin R ein Wasserstoffatom einen Alkyl($C_1$-$C_4$)-Rest oder einen Acyl-Rest, insbesondere den Acetyl-, Benzoyl- oder Naphthoyl-Rest, und n eine Zahl von 1 bis 10 ist; Phenyl-, Naphthyl- oder Pyridyl-Reste; Tolyl-Reste; Aralkoxy-Reste, insbesondere Methoxyphenyl-Reste; Alkaryl-Reste, insbesondere Benzyl-Reste; oder Cycloalky-Reste, vorzugsweise Cyclopentyl- oder Cyclohexylreste,
oder in denen die vorstehend genannten Reste zusätzlich ein oder mehrere Heteroatome, vorzugsweise Stickstoff, Sauerstoff, Schwefel, Phosphor oder eine Kombination davon enthalten,
oder in denen die vorstehend genannten Reste durch einen oder mehrere Carboxamid-Reste, Sulfonamid-Reste, Urethan-Reste, Keto-Reste, primäre, sekundäre oder tertiäre Amino-Reste, Nitro-Reste, Ether-Reste, insbesondere Alkylen($C_2$-$C_4$)-O-Alkyl($C_1$-$C_4$), Alkyl($C_1$-$C_4$)-Reste, Alkoxy($C_1$-$C_4$)-Reste, Aroxy-Reste, insbesondere Phenoxy-Reste, Halogenalkyl($C_1$-$C_{30}$)-Reste, Halogenalkoxy($C_1$-$C_{30}$)-Reste, Ester-Reste, insbesondere -C(O)O-Alkyl($C_1$-$C_4$), ein oder mehrere Halogenatome, Hydroxyl-, Carboxyl-, Sulfonsäure-, Cyano- oder Mercapto-Gruppen oder durch eine Kombination davon substituiert sind; oder in denen $R_1$ und $R_2$ sowie gegebenenfalls $R_1'$ und $R_2'$ zusammen ein gesättigtes oder ungesättigtes, aromatisches oder nichtaromatisches 5- bis 7-gliedriges Ringsystem bilden, vorzugsweise das Pyridinium-Ringsystem, das weitere Heteroatome, bevorzugt Stickstoff, Sauerstoff, Schwefel oder eine Kombination davon, im Ring enthalten kann, insbesondere das Morpholinium-Ringsystem, und das Ringsystem substituiert und/oder durch Ankondensation von oder Verbrückung zu weiteren Ringsystemen modifiziert sein kann, insbesondere das Chinolinium-Ringsystem.

Besonders bevorzugt im Sinne der erfindungsgemäßen Verwendung sind Polysulfondiallylammoniumsalze, in denen das Anion A $CF_3SO_3^-$, $PF_6^-$, $P(Mo_3O_{10})_4^{3-}$, $BF_4^-$, Mono- oder Dithiobenzoat, Halogenid oder $B(Aryl)_4^-$ ist, worin Aryl Phenyl, Naphthyl, Fluorphenyl, Chlorphenyl, Methoxyphenyl, Biphenyl, Pyridyl oder Tolyl oder eine Kombination davon bedeutet, oder ein Alkyl-3,4-disulfomethylpyrrolidinium-betain der Formel (III) ist, worin X und Y jeweils $C_1$-$C_5$-Alkylen und $R_1'$ und $R_2'$ jeweils Wasserstoff oder Methyl bedeuten;
$R_1$ bis $R_{12}$ gleich oder verschieden sind und Wasserstoffatome, geradkettige oder verzweigte, gesättigte oder ungesättigte Alkyl($C_1$-$C_8$)- oder Alkoxy($C_1$-$C_8$)-Reste, Phenyl, Naphthyl oder Pyridyl, Tolyl, Methoxyphenyl, Benzyl, Cyclopentyl oder Cyclohexyl bedeuten, oder wobei die Reste $R_1$ und $R_2$ durch ein oder mehrere Halogenatome oder durch ein oder mehrere der Reste Hydroxyl, Carboxyl, Sulfonsäure, -NH-C(O)-Alkyl($C_1$-$C_4$), -NH-$SO_2$-Alkyl($C_1$-$C_4$), -C(O)-Alkyl($C_1$-$C_4$), -$NH_2$, -NH[Alkyl($C_1$-$C_4$)], -N[Alkyl($C_1$-$C_4$)]$_2$, Nitro, Alkylen($C_2$-$C_4$)-O-Alkyl($C_1$-$C_4$), Alkyl($C_1$-$C_4$), Alkoxy ($C_1$-$C_4$), Phenoxy, Halogenalkyl($C_1$-$C_4$), Halogenalkoxy($C_1$-$C_4$) oder -C(O)O-Alkyl($C_1$-$C_4$) substituiert sind,
das Molekulargewicht zwischen 1000 und 1 000 000 liegt und
das Verhältnis der Anzahl der Diallylammonium-Komponenten und der Anzahl der zweiwertigen $SO_2$-Reste 1:0,1 bis 1:10 beträgt.

Ganz besonders bevorzugt im Sinne der erfindungsgemäßen Verwendung sind Polysulfondiallylammoniumsalze, die ein oder mehrere der Diallylammonium-Komponenten (1) bis (9) enthalten,

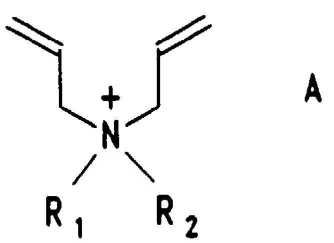

(1) bis (9)

wobei

$R_1$ und $R_2$ jeweils die Bedeutungen H oder $CH_3$ haben; und
in der Komponente (1) A ein 1-Alkyl-3,4-disulfomethyl-pyrrolidinium-betain der Formel (III) bedeutet, wobei X und Y jeweils Alkyl($C_1$-$C_5$) bedeuten und $R_1'$ und $R_2'$ jeweils H oder $CH_3$ sind;
in der Komponente (2) A die Bedeutung $BF_4^-$ hat;
in der Komponente (3) A die Bedeutung $B(C_6H_5)_4^-$ hat,
in der Komponente (4) A die Bedeutung $PF_6^-$ hat,

in der Komponente (5) A die Bedeutung 1,1-Dialkyl-3,4-disulfomethylpyrrolidinium-betain hat,
in der Komponente (6) A die Bedeutung $P(Mo_3O_{10})_4^{3-}$ hat,
in der Komponente (7) A die Bedeutung $CF_3SO_3^-$ hat,
in der Komponente (8) A die Bedeutung $HSO_4^-$ hat,
in der Komponente (9) A die Bedeutung $Cl^-$ hat,
sowie beliebige Mischungen oder Mischkristalle von Polysulfondiallylammoniumsalzen, die zwei oder mehrere der Komponenten (2) bis (9) enthalten;
die Molmasse der Polysulfondiallylammoniumsalze zwischen 1000 und 500.000 liegt und das Verhältnis der Anzahl der Diallylammonium-Komponenten und der Anzahl der zweiwertigen $SO_2$-Reste 1:1 beträgt. Besonders bevorzugt sind auch Mischungen oder Mischkristalle von Polysulfondiallylammoniumsalzen, die zwei oder mehrere der Komponenten (2), (3), (4) und (7) enthalten.

Bei der Copolymerisation monomerer Diallylammonium-Verbindungen mit $SO_2$ oder einer $SO_2$-freisetzenden Verbindung können die Diallylammonium-Kationen je nach Herstellungsverfahren zu fünf- oder sechsgliedrigen Ringen cyclisieren. Die Cyclisierung zu den fünfgliedrigen Pyrrolidinium-Ringen erfolgt in einer radikalischen intra-intermolekularen Cyclopolymerisation und ist beispielsweise in EP-A-251 558, beschrieben. Die Cyclisierung zu den sechsgliedrigen Piperidinium-Ringen wird bei höherer Reaktionstemperatur zunehmend begünstigt (Houben-Weyl, Methoden der organischen Chemie, Bd. E 20/II, 1987, S.1023-1028) und ist beispielsweise in DE-A-2 608 644 beschrieben. Das N-Atom des Diallylamins kann durch Alkyl-, Aryl- oder heterocyclische Gruppen substituiert sein.

Für den erfindungsgemäßen Zweck sind Polysulfondiallylammoniumsalze sowohl mit fünf- als auch mit sechsgliedrigen Ringsystemen geeignet.

Die Reihenfolge der Diallylammonium-Komponenten und der Sulfon-Reste in der polymeren Kette kann beliebig sein. Sowohl eine kumulierende als auch eine alternierende oder eine ataktische Abfolge der genannten Kettenbausteine ist möglich.

Einige der für die erfindungsgemäße Verwendung eingesetzten Polysulfondiallylammoniumsalze sind bereits bekannt und finden in anderen technischen Gebieten Anwendung. Ein Fünfring-Copolymer von Diallylammoniumchlorid und Schwefeldioxid wird als Stabilisierungsmittel für Tone eingesetzt (EP-A-251 558). Ein Sechsring-Copolymersalz mit den Anionen $Cl^-$ oder $Br^-$ wird als Coat-Material für Glasfasern eingesetzt (JP-59-50052) oder als Wirkstoff gegen Virusinfektionen des Tabak-Mosaik-Virus (JP-54-151 126). Ein Sechsring-Copolymersalz mit der Anionen Halogenid, $HSO_4^-$, $HSO_3^-$, $HCO_2^-$ oder Acetat wird als Additiv bei der galvanischen Zinkabscheidung eingesetzt (DE-A-2 608 644).

Gegenstand der vorliegenden Erfindung ist auch ein Polysulfondiallylammoniumsalz, erhältlich durch

a) Copolymerisation von Salzen, vorzugsweise Halogeniden, der monomeren Diallylammonium-Komponenten der Formel (I) mit Schwefeldioxid oder einer Schwefeldioxid freisetzenden Verbindung, wobei die Diallylammonium-Kationen überwiegend zu einem Pyrrolidinium-Ring cyclisiert sind und durch ein oder mehrere der zweiwertigen Reste $-SO_2-$ miteinander zu Polymeren verbunden sind, und
b) Anionenaustausch, wobei die Anionen, vorzugsweise die Halogenidionen, der Diallylammonium-Komponenten durch die nachstehend genannten Anionen A vollständig oder teilweise ersetzt werden,

wobei die Polysulfondiallylammoniumsalze ein Molekulargewicht zwischen 500 und 5 000 000, vorzugsweise zwischen 1 000 und 1 000 000, insbesondere zwischen 1 000 und 500 000 haben, wobei das Verhältnis der Anzahl der Diallylammonium-Komponenten und der Anzahl der zweiwertigen Reste $-SO_2-$ 1:0,01 bis 1:100, vorzugsweise 1:0,1 bis 1:10, insbesondere 1:1, beträgt, und
wobei die Reste $R_1$ bis $R_{12}$ in Formel (I) wie vorstehend beschrieben definiert sind und das Anion A das stöchiometrische Anionenäquivalent einer Heteropolysäure; eines Borats der Formel (II); eines Disulfo-pyrrolidinium-betains der Formel (III); $PF_6^-$ oder Trifluormethansulfonat ist.

Gegenstand der vorliegenden Erfindung ist auch ein Gemisch oder ein Mischkristall eines Polysulfondiallylammoniumsalzes mit gemischten Anionen, gemischten Kationen oder gemischten Anionen und Kationen, wobei der Mischkristall auch Chlorid enthalten kann.

Beispiele für Heteropolysäuren, Borate der Formel (II), Disulfo-pyrrolidinium-betaine der Formel (III), organische Anionen und anorganische Anionen sind bereits bei der Beschreibung der erfindungsgemäßen Verwendung genannt.

Ganz besonders bevorzugt sind Polysulfondiallylammoniumsalze, die ein oder mehrere vorstehend genannten Diallylammonium-Komponenten (1) bis (8) enthalten.

Gegenstand der Erfindung ist weiterhin ein Verfahren zur Herstellung der besagten Polysulfondiallylammoniumsalze durch Anionenaustausch. Die Herstellung erfolgt, indem man

a) ein Polysulfondiallylammonium-halogenid, welches beispielsweise gemäß EP-A-251 558 hergestellt worden ist, wobei Halogenid Fluorid, Chlorid, Bromid oder Jodid, vorzugsweise Chlorid oder Bromid, besonders bevorzugt

Chlorid, bedeutet, in Wasser oder in einem Gemisch aus Wasser und einem mit Wasser vollständig oder teilweise mischbaren organischen Lösungsmittel löst,

b) die nach a) hergestellte Lösung mit einer oder mehreren dem Anion A zugrundeliegenden Verbindung(en), vorzugsweise mit dem Natriumsalz des Anions A, bei einer Temperatur zwischen 0°C und 100°C, vorzugsweise 10°C und 70°C, und einem pH-Wert zwischen 3 und 10, vorzugsweise 5 und 8, versetzt und

c) anschließend das entstandene Polysulfondiallylammoniumsalz gegebenenfalls durch Aussalzen mit einem halogenhaltigen Salz, beispielsweise Kaliumchlorid, ausfällt. Die Polysulfondiallylammoniumsalze sind oftmals in Wasser oder im genannten Wasser/Lösemittelgemisch so schwer löslich, daß sie aus der Lösung auch ohne zusätzliches Aussalzen ausfallen.

d) Die ausgefällten Polysulfondiallylammoniumsalze werden nach dem Ausfällen durch eine geeignete Methode, beispielsweise durch Auswaschen oder durch ein Reversosmose-Verfahren, weitgehend von anorganischen Salzen, insbesondere von Natrium- oder Kaliumchlorid, befreit und anschließend

e) im Vakuum bei erhöhter Temperatur, vorzugsweise bei 70°C bis 100°C, getrocknet.

Der Salzgehalt der nach dem erfindungsgemäßen Verfahren hergestellten Verbindungen beträgt weniger als 3 Gew.-%, vorzugsweise weniger als 1,5 Gew.-%, und der Wassergehalt weniger als 5 Gew.-%, vorzugsweise weniger als 2,5 Gew.-%.

Die nach dem erfindungsgemäßen Verfahren hergestellten Verbindungen sind gekennzeichnet durch einen spezifischen Widerstand im Bereich von $10^4$ bis $10^{16}$ Ohm x cm, vorzugsweise $10^6$ bis $10^{16}$ Ohm x cm, und durch eine Dielektrizitätszahl $\varepsilon$ im Bereich von 2 bis 14, vorzugsweise 3 bis 12.

Je nach Fällungsbedingungen, wie Dosiergeschwindigkeit, Konzentration der Reaktionspartner und Temperatur, lassen sich amorphe oder teilkristalline Polysulfondiallylammoniumsalze erhalten.

Die Herstellung von Polydiallylammoniumsulfon-chloriden ist in der Literatur beschrieben [z.B. S.Harada und K. Arai, Makromol.Chem. 107, (1967) 64; Y.Negi, Harada,S. und Katayama,M., Makromolekulare Chem. 90 (1966) 177; DE-A-1 957 756]. Die Verbindungen werden beispielsweise durch Umsetzung von Allylhalogeniden mit Allylaminen, Quaternisierung der so entstandenen Diallylamine und anschließende Polymerisierung in Gegenwart von $SO_2$ oder einer $SO_2$ freisetzenden Verbindung, beispielsweise ein $SO_2$-Lösungsmitteladdukt, insbesondere ein $SO_2$-Aceton-Addukt, ein $SO_2$-Dimethylsulfoxid-Addukt, ein $SO_2$-Methanol-Addukt oder ein Gemisch der genannten Addukte, gegebenenfalls unter Einwirkung eines Katalysators, hergestellt. $SO_2$ läßt sich auch durch eine Retro-Diels-Alder-Reaktion eines $SO_2$-Butadien-Addukts freisetzen.

Das für Polydiallylammoniumsulfon-halogenide genannte Herstellungsverfahren gilt in analoger Weise auch für solche, in denen die Reste $R_1$ bis $R_{12}$ die vorstehend genannten Bedeutungen haben.

Disulfo-pyrrolidinium-betaine der Formel (III) lassen sich beispielsweise nach der US-PS 4 877 885 herstellen.

In einer bevorzugten Ausführungsform wird der Anionenaustausch in einem Gemisch aus Wasser und Isopropanol, Wasser und Isobutanol oder Wasser und Methylisobutylketon durchgeführt.

In einer weiteren bevorzugten Ausführungsform wird das Polydiallylammoniumsulfon-chlorid mit Natriumtetraphenylborat, Natriumtetra-o-fluorphenylborat, Natriumtetra-m-fluorphenylborat, Natriumtetra-p-fluorphenylborat, Natriumtetra-o-chlorphenylborat, Natriumtetra-m-chlorphenylborat, Natriumtetra-p-chlorphenylborat, Natriumtetra-o-tolylborat, Natriumtetra-m-tolylborat, Natriumtetra-p-tolylborat, Natriumtetra-1-naphthylborat, Natriumtetra-2-naphthylborat, Natriumtetra-o-methoxyphenylborat, Natriumtetra-m-methoxyphenylborat, Natriumtetra-p-methoxyphenylborat, Natriumtetra-o-biphenylborat, Natriumtetra-m-biphenylborat, Natriumtetra-p-biphenylborat, Natriumtetrabenzylborat, Natriumtetra-o-pyridylborat, Natriumtetra-m-pyridylborat, Natrium-p-pyridylborat, Tetra(perfluoralkyl)phenylborat oder Natriumtetrafluoroborat umgesetzt.

Die erfindungsgemäß genannten Polysulfondiallylammoniumsalze sind farblos und besitzen besonders hohe und konstante Ladungssteuereigenschaften, gute Thermostabilitäten und sehr gute Dispergierbarkeiten.
Ein großer technischer Vorteil dieser sehr gut dispergierbaren Verbindungen liegt darin, daß Substanzen derselben Verbindungsklasse je nach Carrier-Harz-Kombination entweder als positives oder negatives Ladungssteuermittel eingesetzt werden können. Es können somit sowohl Positiv- als auch Negativtoner anhand einer festen Tonerbasisrezeptur (bestehend aus Tonerbindemittel, Farbmittel, Fließhilfsmittel und gegebenenfalls weiteren Komponenten), durch Wahl des gewünschten Carriers und/oder Harzes sowie durch geeignete Kationen/Anionen-Kombination der erfindungsgemäßen Verbindungen hergestellt werden.

Im Vergleich zu den aus den DE-A-4 029 652 und DE-A-4 029 653 bekannten polymeren Verbindungen sind die erfindungsgemäßen ringförmigen Polysulfondiallylammoniumsalze leichter zu isolieren und zu trocknen und haben eine deutlich verbesserte Dispergierbarkeit im Bindemittel.

Bei den erfindungsgemäßen Verbindungen sind die wenig aufwendige Synthese, die kostengünstige Herstellung, die hohe Wirksamkeit, die ausgezeichnete Thermostabilität und die allgemeine Harzverträglichkeit bei guter Abscheidequote und Umgriff von ganz besonderem Vorteil. Für den technischen Einsatz besonders wichtig ist die sehr gute Dispergierbarkeit, so daß insgesamt eine effiziente und ökonomische Ausnutzung versprühter Pulverlacke resultiert.

Ein weiterer Vorteil der erfindungsgemäß verwendeten Verbindungen ist, daß sie farblos sind und einen hohen Ladungssteuereffekt aufweisen und daß dieser über einen längeren Aktivierzeitraum hinweg (bis zu 24 Stunden) konstant ist.

So zeigt ein Test-Toner mit 1 Gewichtsprozent eines Polysulfondiallylammoniumtetraphenylborats nach 10 Minuten eine Aufladung von -16 µC/g, nach 30 Minuten von -25 µC/g, nach 2 Stunden von -32 µC/g und nach 24 Stunden von -33 µC/g (Anwendungsbeispiel 1).

Der hohe Ladungssteuereffekt wird um so deutlicher, wenn zum Vergleich das Aufladungsverhalten des reinen Tonerbindemittels (z.B. Styrol/Acrylat-Harz) betrachtet wird (Vergleichsbeispiel 1): -4 µC/g nach 10 Minuten, -12 µC/g nach 30 Minuten, -27 µC/g nach 2 Stunden, -48 µC/g nach 24 Stunden.

Tabelle 1 faßt beispielhaft die Testtoner-Messungen der Verbindungen 2, 3, 4, 6, 7 und 9 zusammen.

Tabelle 1

| 1% Testtoner, Styrolacrylat-Harz; Aufladung in µC/g; (Verb. = Verbindung) | | | | | | |
|---|---|---|---|---|---|---|
| Verb. | Anion | 5 Min. | 10 Min. | 30 Min. | 2 Std. | 24 Std. |
| (2) | $BF_4^-$ | -7 | -10 | -15 | -20 | -30 |
| (3) | $B(C_6H_5)_4^-$ | -10 | -16 | -25 | -32 | -33 |
| (4) | $PF_6^-$ | +3 | +3 | +3 | +2 | +2 |
| (6) | $P(Mo_3O_{10})_4^{3-}$ | -5 | -8 | -14 | -22 | -34 |
| (7) | $CF_3SO_3^-$ | +1 | -1 | -5 | -17 | -32 |
| (9) | $Cl^-$ | -5 | -9 | -15 | -23 | -30 |
| Harz | --- | -2 | -4 | -12 | -27 | -48 |

Für die Praxis von großer Bedeutung ist, daß die erfindungsgemäß verwendeten Verbindungen chemisch inert und gut verträglich mit Bindemitteln, beispielsweise Styrolacrylaten, Polyestern, Epoxiden und Polyurethanen, sind. Zudem sind die Verbindungen thermostabil und können somit ohne Schwierigkeiten mit den gängigen Verfahren (Extrudieren, Kneten) unter den üblichen Bedingungen (Temperaturen zwischen 100°C und 200°C) in die gängigen Bindemittel eingearbeitet werden. Die Synthese der erfindungsgemäßen Verbindungen ist wenig aufwendig, und die Produkte fallen in hoher Reinheit an.

Ein Vergleich sowohl mit der reinen Pulverlackharz-Komponente (Vergleichsbeispiel 2) als auch mit einer aus DE-A-4 029 652, Herstellungsbeispiel 2, bekannten polymeren Ammonium-Verbindung (Vergleichsbeispiel 3) zeigt eine deutliche Verbesserung der Abscheidequote durch die Verwendung der erfindungsgemäßen Polysulfondiallylammoniumsalze.

Die erfindungsgemäß verwendeten Verbindungen werden einzeln oder in Kombination miteinander in einer Konzentration von 0,01 bis 50 Gewichtsprozent, vorzugsweise von 0,1 bis 5,0 Gewichtsprozent, bezogen auf die Gesamtmischung, in das Bindemittel des jeweiligen Toners, Entwicklers, Lacks oder Pulverlacks homogen, beispielsweise durch Extrudieren oder Einkneten, eingearbeitet. Dabei können die Ladungssteuermittel für Toner oder die ladungsverbessernden Mittel für Pulver und Lacke zur Oberflächenbeschichtung, insbesondere für triboelektrisch oder elektrokinetisch versprühte Pulverlacke, als getrocknete und gemahlene Pulver, Dispersionen oder Lösungen, Preßkuchen, Masterbatch, als auf geeignete Träger, wie z.B. Kieselgel, $TiO_2$, $Al_2O_3$, aus wäßriger oder nichtwäßriger Lösung aufgezogene Verbindungen oder in sonstiger Form zugegeben werden. Ebenso können die erfindungsgemäß verwendeten Verbindungen grundsätzlich auch schon bei der Herstellung der jeweiligen Bindemittel zugegeben werden, d.h. im Verlauf von deren Polymerisation, Polyaddition oder Polykondensation.

Die Höhe der elektrostatischen Aufladung der elektrophotographischen Toner oder der Pulverlacke, in welche die erfindungsgemäßen Ladungssteuermittel homogen eingearbeitet werden, wird an Standardtestsystemen unter gleichen Bedingungen (gleiche Dispergierzeiten, gleiche Teilchengrößenverteilung, gleiche Teilchenform) bei etwa 20°C und 50 % relativer Luftfeuchte gemessen. Die elektrostatische Aufladung des Toners erfolgt durch Verwirbelung mit einem Carrier, d.h. einem standardisierten Reibungspartner (3 Gewichtsteile Toner auf 97 Gewichtsteile Carrier), auf einer Rollbank (150 Umdrehungen pro Minute). Anschließend wird an einem üblichen q/m-Meßstand die elektrostatische Aufladung gemessen (J.H. Dessauer, H.E. Clark, "Xerography and related Processes", Focal Press, N. Y., 1965, Seite 289; J.F. Hughes, "Electrostatic Powder Coating", Research Studies Press Ltd., Letchworth, Hertfordshire, England, 1984, Chapter 2). Bei der Bestimmung des q/m-Wertes oder der Triboaufladung von Pulverlacken ist die Teilchengröße von großem Einfluß, weshalb bei den durch Sichtung erhaltenen Toner- oder Pulverlackproben streng auf einheitliche Teilchengrößenverteilung geachtet wird. So wird für Toner eine mittlere Teilchengröße von 10 µm angestrebt, während für Pulverlacke eine mittlere Teilchengröße von 50 µm praktikabel ist.

Die Triboversprühung der Pulver(lacke) wird mit einem Sprühgerät mit einem Normsprührohr und einer Sterninnenstange bei maximalem Pulverdurchsatz mit einem Sprühdruck von 3 bar durchgeführt. Der zu besprühende Gegenstand wird hierzu in einer Spritzkabine aufgehängt und aus ca. 20 cm Abstand direkt von vorne ohne weitere Bewegung des Sprühgerätes besprüht. Die jeweilige Aufladung des versprühten Pulvers wird anschließend mit einem "Meßgerät zur Messung von triboelektrischer Ladung von Pulvern" der Firma Intec (Dortmund) gemessen. Zur Messung wird die Meßantenne des Meßgerätes direkt in die aus dem Sprühgerät austretende Pulverwolke gehalten. Die aus der elektrostatischen Ladung von Pulverlack oder Pulver sich ergebende Stromstärke wird in $\mu A$ angezeigt. Die Abscheidequote wird anschließend in % durch eine Differenzwiegung aus versprühtem und abgeschiedenem Pulverlack bestimmt.

Die nachstehenden Beispiele dienen zur Erläuterung der Erfindung, ohne diese darauf zu beschränken. Die Angabe "Min." bedeutet "Minuten" und "Std." bedeutet "Stunden".

Herstellungsbeispiele

1) Polysulfondiallyldimethylammonium-tetraphenylborat

79,6 g (0,3 Mol, bezogen auf die Monomereneinheit) Polysulfondiallyldimethylammonium-chlorid (Herstellung: S. Harada und K. Arai, Makromol. Chem. 107, (1967) 64; Y.Negi, S. Harada und M. Katayama, Makromolekulare Chem. 90 (1966) 177; DE-A-1 957 756) werden in 2 l entionisiertem Wasser bei 70°C unter Rühren gelöst. Hierzu wird eine Lösung aus 104,8 g $NaB(C_6H_5)_4$ (0,3 Mol) in 500 ml entionisiertem Wasser, bei Raumtemperatur gelöst, innerhalb von 10 Min bei einer Temperatur von 70°C unter Rühren (200 Upm) zugetropft. Es fällt spontan ein weißer Feststoff aus. Zur Vervollständigung der Reaktion rührt die Reaktionssuspension 30 Min bei 70°C (100 Upm) nach und anschließend wird über eine Fritte abgesaugt. Das Filtrat wird nochmals mit 100 ml einer 10 %igen wäßrigen $NaB(C_6H_5)_4$-Lösung versetzt und die gebildete Nachfällung abgesaugt.

Die vereinigten Filtrationsrückstände werden 3 mal mit je 2,5 l entionisiertem Wasser salzfrei gewaschen und bei 80°C im Vakuumtrockenschrank (200 mbar) getrocknet. Nach der Trocknung wird ein feines, weißes Pulver erhalten, das ohne weitere Aufarbeitung zur Testtoner-Bereitung als Ladungssteuermittel eingesetzt werden kann.
Ausbeute: 151,3 g (99 % d.Th.)
Zersetzung: > 170°C

| | | | | | |
|---|---|---|---|---|---|
| Elementaranalyse: (in %) | C 71,0; | H 7,3; | N 3,0; | S 6,3; | B 1,7 (gefunden) |
| | C 75,0; | H 7,1; | N 2,8; | S 6,3; | B 2,0 (berechnet) |

$H_2O$: 2,4 %; spezifischer Widerstand: $1 \times 10^{14}$ Ohm x cm; $\varepsilon$ (bei 1 kHz): 4,9.

2) Polysulfondiallyldimethylammonium-tetrafluoroborat

11,36 g (0,05 Mol) Polysulfondiallyldimethylammonium-chlorid werden in 330 ml entionisiertem Wasser bei 60°C unter Rühren gelost und mit einer Lösung aus 5,66 g $NaBF_4$ (0,05 Mol) und 50 ml entionisiertem Wasser bei 60°C innerhalb von 2 Min. versetzt. Die weitere Reaktionsführung erfolgt analog Herstellungsbeispiel 1.
Ausbeute: 12,2 g (88 % d.Th.)
Zersetzung: > 160°C

| | | | | | | |
|---|---|---|---|---|---|---|
| Elementaranalyse: (in %) | C 33,4; | H 6,2; | N 4,9; | S 10,7; | B 3,2; | F 22,2 (gefunden) |
| | C 34,7; | H 6,2; | N 5,1; | S 11,6; | B 3,9; | F 27,4 (berechnet) |

$H_2O$: 4,9 %.

3) Polysulfondiallyldimethylammonium-molybdatophosphat

33,4 g (0,15 Mol) Polysulfondiallyldimethylammonium-chlorid werden in 330 ml entionisiertem Wasser bei 70°C unter Rühren gelöst und mit einer Lösung aus 94,6 g $Na_3[P(Mo_3O_{10})_4]^{3-}$ (entspricht 1/3 x 0,15 Mol) und 1,8 l entionisiertem Wasser bei 70°C in 20 Min versetzt. Die weitere Reaktionsführung erfolgt analog Herstellungsbeispiel 1.
Ausbeute: 119,6 g (33 % d.Th.)
Zersetzung: > 210°C

| Elementaranalyse: (in %) | C 17,1; | H 3,2; | N 3,0; | S 4,3; | P 1,2; | Mo 41,5 (gefunden) |
|---|---|---|---|---|---|---|
| | C 12,4; | H 2,0; | N 1,8; | S 4,1; | P 1,3; | Mo 48,1 (berechnet) |

$H_2O$: 1,6 %.

4) Polysulfondiallyldimethylammonium-hexafluorphosphat

11,36 g (0,05 Mol) Polysulfondiallyldimethylammoniumsulfon-chlorid werden in 330 ml entionisiertem Wasser bei 60°C unter Rühren gelöst und mit einer Lösung aus 9,4 g $KPF_6$ (0,05 Mol) und 80 ml entionisiertem Wasser bei 60°C innerhalb von 3 Min versetzt. Die weitere Reaktionsführung entspricht Herstellungsbeispiel 1.
Ausbeute: 15,2 g (91 % d.Th.)
Zersetzung: > 130°C

| Elementaranalyse | | | | | | |
|---|---|---|---|---|---|---|
| gef.: | C 29,3 %; | H 4,4 %; | N 4,1%; | F 31,5 % | S 9,5 %; | P 9,0 % |
| ber.: | C 28,6 %; | H 4,7 %; | N 4,2 %; | F 34,0 %; | S 9,0 %; | P 9,2 % |

$H_2O$: 2,05 %.

5) Polysulfondiallyldimethylammonium-trifluormethylsulfonat

11,36 g (0,05 Mol) Polysulfondiallyldimethylammonium-chlorid werden in 330 ml entionisiertem Wasser bei 60°C unter Rühren gelöst und mit einer Lösung aus 8,6 g $NaCF_3SO_3$ (0,05 Mol) und 80 ml entionisiertem Wasser bei 60°C innerhalb von 3 Min versetzt. Die weitere Reaktionsführung erfolgt analog Herstellungsbeispiel 1.
Ausbeute: 19,6 g (92 % d.Th.)
Zersetzung: > 250°C

| Elementaranalyse: | | | | | |
|---|---|---|---|---|---|
| gef.: | C 31 %; | H 4,4 %; | F 15,2 %; | N 3,9 %; | S 17,4 % |
| ber.: | C 29 %; | H 4,3 %; | F 15,2 %; | N 3,7 %; | S 17,1 % |

$H_2O$: 1,2%. Spezifischer Widerstand: 1 x $10^8$ Ohm x cm; ε (50 kHz) : 9,2

Anwendungsbeispiel 1

1,0 Teile der Verbindung aus Herstellungsbeispiel 1 werden mittels eines Kneters 45 Min in 99,0 Teile eines Tonerbindemittels (Styrol-Methacrylat-Copolymer 60:40) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier aktiviert, der aus mit Styrol-Methacrylat-Copolymer 90:10 beschichteten Magnetit-Teilchen der Größe 50 bis 200 µm besteht.

Die Messung erfolgt an einem üblichen q/m-Meßstand. Durch Verwendung eines Siebes mit einer Maschenweite von 25 µm wird sichergestellt, daß bei den Tonerausblasungen kein Carrier mitgerissen wird. Die Messungen erfolgen bei 20°C und 50 % relativer Luftfeuchte. In Abhängigkeit von der Aktivierdauer werden folgende q/m-Werte [µC/g] gemessen:

| Aktivierdauer | Aufladung q/m [µC/g] |
|---|---|
| 10 Min. | -16 |
| 30 Min. | -25 |
| 2 Std. | -32 |
| 24 Std. | -33 |

Anwendungsbeispiele 2, 3 und 4

Jeweils 1 Teil der Verbindungen aus den Herstellungsbeispielen 2, 3 und 4 werden, wie in Anwendungsbeispiel 1 beschrieben, in jeweils 99 Teile Tonerbindemittel homogen eingearbeitet. In Abhängigkeit von der Aktivierdauer werden folgende q/m-Werte [µC/g] gemessen:

| Aktivierdauer | Aufladung q/m [µC/g] | | |
|---|---|---|---|
| Verbindung gemäß Herstellungsbeispiel: | 2 | 3 | 4 |
| 10 Min. | -10 | -8 | +3 |
| 30 Min. | -15 | -14 | +3 |
| 2 Std. | -20 | -22 | +2 |
| 24 Std. | -30 | -34 | +2 |

Anwendungsbeispiel 5

1 Teil der Verbindung aus Herstellungsbeispiel 1 wird, wie in Anwendungsbeispiel 1 beschrieben, in 99 Teile eines Pulverlackbindemittels auf Basis eines carboxylhaltigen Polyesterharzes homogen eingearbeitet.
Zur Bestimmung der Abscheidequote werden 30 g des Test-Pulverlackes mit einem definierten Druck durch eine wie zuvor beschriebene Tribopistole versprüht. Durch Differenzwiegung läßt sich die abgeschiedene Pulverlackmenge bestimmen und eine Abscheidequote in % definieren sowie durch die Ladungsübertragung ein Stromfluß (µA) abgreifen.

| Druck [bar] | Strom [µA] | Abscheidequote [%] |
|---|---|---|
| 3 | 1,4-1,8 | 20 |
| 5 | 2,6-2,9 | 16 |

Anwendungsbeispiel 6

Jeweils 1 Teil der Verbindung aus dem Herstellungsbeispiel 5 wird, wie in Anwendungsbeispiel 1 beschrieben, in jeweils 99 Teile Tonerbindemittel homogen eingearbeitet. In Abhängigkeit von der Aktivierdauer werden folgende q/m-Werte [µC/g] gemessen:

| Aktivierdauer | q/m [µC/g] |
|---|---|
| 10 Min. | -1 |
| 30 Min. | -5 |
| 2 Std. | -17 |
| 24 Std. | -32 |

Vergleichsbeispiel 1

Zur Messung unter Verwendung des reinen Tonerbindemittels wird wie in Anwendungsbeispiel 1 verfahren, ohne jedoch Zusatzstoffe einzukneten.

| Aktivierdauer | q/m [µC/g] |
|---|---|
| 10 Min. | -4 |
| 30 Min. | -12 |
| 2 Std. | -27 |
| 24 Std. | -48. |

Vergleichsbeispiel 2

Zur Bestimmung der Abscheidequote des reinen Pulverlackbindemittels wird wie in Anwendungsbeispiel 5 verfahren.

| Druck [bar] | Strom [µA] | Abscheidequote [%] |
|---|---|---|
| 3 | 0.1 | 5 . |

Vergleichsbeispiel 3

Zur Bestimmung des triboelektrischen Aufladeverhaltens der polymeren ionogenen Ammonium-Verbindung gemäß DE-A-4 029 652, Herstellungsbeispiel 2, wird wie in Anwendungsbeispiel 6 verfahren:

| Aktivierdauer | q/m [µC/g] |
|---|---|
| 10 Min. | - 8 |
| 30 Min. | - 8 |
| 2 Std. | - 9 |
| 24 Std. | -10 |

Zur Bestimmung der Kenndaten bei triboelektrischer Pulverlackversprühung der polymeren Ammonium-Verbindung gemäß Herstellungsbeispiel 2 der DE-A-4 029 652, wird wie in Anwendungsbeispiel 5 verfahren.

| Druck [bar] | Strom [µA] | Abscheidequote [%] |
|---|---|---|
| 3 | 0,7 - 0,9 | 18 . |

**Patentansprüche**

**1.** Verwendung von Polysulfondiallylammoniumsalzen, erhältlich durch

a) Copolymerisation von Salzen monomerer Diallylammonium-Komponenten der Formel (I)

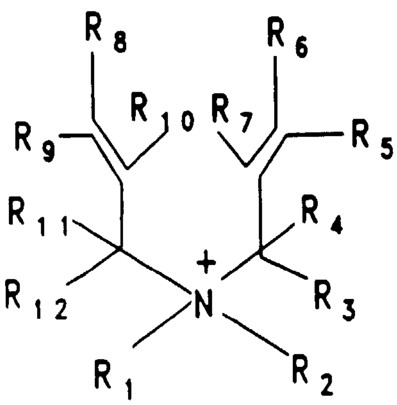

(I)

mit Schwefeldioxid oder einer Schwefeldioxid freisetzenden Verbindung und

b) Anionenaustausch, wobei die Anionen der Diallylammonium-Komponenten durch die Anionen A vollständig oder teilweise ersetzt werden,

wobei die Diallylammonium-Komponenten jeweils zu einem fünf- oder sechsgliedrigen Ring cyclisiert sind und durch ein oder mehrere zweiwertige Reste $-SO_2-$ miteinander zu Polymeren verbunden sind,
wobei die Polysulfondiallylammoniumsalze ein Molekulargewicht zwischen 500 und 5.000.000 haben,
wobei das Verhältnis der Anzahl der Diallylammonium-Komponenten und der Anzahl der zweiwertigen $SO_2$-Reste 1:0,01 bis 1:100 beträgt,
wobei die Reste $R_1$ bis $R_{12}$ gleich oder verschieden sind und ein Wasserstoffatom, ein Halogenatom, einen Hydroxyl-Rest, einen primären, sekundären oder tertiären Amino-Rest, einen Carbonsäure- oder Carbonsäureester-Rest, einen Acylrest, einen Sulfonsäure- oder Sulfonsäureester-Rest, einen Cyano- oder Nitro-Rest, einen Rest eines $C_1$-$C_{30}$-aliphatischen, $C_7$-$C_{60}$-araliphatischen oder $C_6$-$C_{30}$-aromatischen Kohlenwasserstoffes, der durch Heteroatome unterbrochen sein kann, bedeuten, und

A jeweils das stöchiometrische Anionenäquivalent eines Anions aus der Gruppe $NO_3^-$, $OH^-$, $HSO_4^-$, $SO_4^{2-}$, $HSO_3^-$, $S_2^-$, $S^{2-}$, $SO_3^{2-}$, $S_2O_3^{2-}$, $HCO_3^-$, $CO_3^{2-}$, $H_2PO_4^-$, $HPO_4^{2-}$, $PO_4^{3-}$, $CN^-$, $CF_3SO_3^-$, $CF_3COO^-$, Cyanat, Isocyanat, $F^-$, $Cl^-$, $Br^-$, $J^-$, Thiocyanat, Zinktetracyanat, Zinktetrathiocyanat, Perchlorat, $PF_6^-$, $MoO_4^{2-}$, $MoS_4^{2-}$, $WO_4^{2-}$ oder
eines Anions einer Heteropolysäure oder
eines Borats der allgemeinen Formel (II)

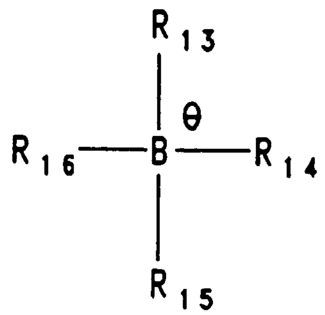

(II)

wobei die Reste $R_{13}$ bis $R_{16}$ gleich oder verschieden sind und $C_1$-$C_{30}$-aliphatische, $C_3$-$C_{10}$-cycloaliphatische Reste, Aryl- oder Heteroaryl- oder Aralkylreste, wobei diese Reste durch Alkyl($C_1$-$C_4$)-, Alkoxy($C_1$-$C_4$)- oder Arylreste oder Halogenatome substituiert sein können, oder Fluoratome bedeuten;
oder eines Anions
aus der Gruppe
Phenolat; olefinisches, aliphatisches oder aromatisches Carboxylat, Thiolat, Sulfonat oder Sulfat, in denen die Alkyl-, Alkenyl- oder Arylreste auch perfluoriert sein können;
oder eines Disulfo-pyrrolidinium-betains der allgemeinen Formel (III)

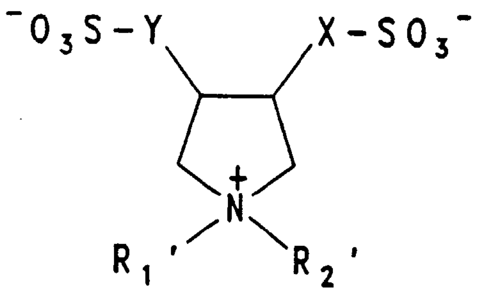

(III)

wobei $R_1$' und $R_2$' die für $R_1$ und $R_2$ genannten Bedeutungen haben und X und Y jeweils ein geradkettiger oder verzweigter aliphatischer, gesättigter oder ungesättigter Alkylen($C_1$-$C_{18}$)-Rest oder Alkoxylen($C_1$-$C_{18}$)-Rest ist;
oder A eine Kombination der vorstehend genannten Anionen bedeutet;
einzeln oder in Kombination als Ladungssteuermittel in elektrophotographischen Tonern und Entwicklern, die zum Kopieren und Vervielfältigen von Vorlagen sowie zum Drucken von elektronisch, magnetisch oder optisch gespeicherten Informationen oder im Colorproofing eingesetzt werden, sowie als Ladungssteuermittel in Pulvern und Pulverlacken.

**2.** Verwendung gemäß Anspruch 1, dadurch gekennzeichnet, daß die Anionen der Heteropolysäure $P(Mo_3O_{10})_4^{3-}$, $P(W_3O_{10})_4^{3-}$ oder Silicomolybdate sind.

**3.** Verwendung gemäß Anspruch 1, dadurch gekennzeichnet, daß das Borat der Formel (II) Tetrafluoroborat, Tetrachloroborat, Tetraphenylborat, Tetra(fluorphenyl)borat, Tetra(chlorphenyl)borat, Tetratolylborat, Tetranaphthylborat, Tetra(methoxyphenyl)borat, Tetrabiphenylborat, Tetrabenzylborat, Tetra(perfluoroalkyl)phenylborat oder Tetrapyridylborat ist.

**4.** Verwendung gemäß Anspruch 1, dadurch gekennzeichnet, daß das Anion Formiat, Lactat, Tartrat, Benzoat, Phthalat, Terephthalat, Isophthalat, Sulfoisophthalat, Salicylat, 2-Hydroxy-3-naphthoat, 2-Hydroxy-6-naphthoat, Ethylsulfonat, Phenylsulfonat, Tosylat, Perfluoracetat, Perfluor($C_1$-$C_{30}$)-alkylbenzoat, Perfluorethylsulfonat, Perfluor ($C_1$-$C_{30}$)-alkyl-benzolsulfonat, Citrat, Oxalat oder Succinat ist.

**5.** Verwendung gemäß Anspruch 1, dadurch gekennzeichnet, daß im Disulfopyrrolidinium-betain -betain der Formel (III) $R_1$' und $R_2$' jeweils die Bedeutung Wasserstoff, Alkyl($C_1$-$C_5$), Alkoxy($C_1$-$C_5$), Polyoxalkylen-Reste, bevorzugt Polyoxethylen- oder Polyoxpropylen-Reste, der allgemeinen Formel (Alkylen($C_1$-$C_5$)-O)n-R haben, worin R ein Wasserstoffatom oder einen Alkyl($C_1$-$C_4$)-Rest bedeutet und n eine Zahl von 1 bis 10 ist, und X und Y jeweils Alkylen($C_1$-$C_5$) bedeuten.

**6.** Verwendung nach mindestens einem der Ansprüche 1 bis 5, dadurch gekennzeichnet, daß $R_1$ bis $R_{12}$ Wasserstoffatome, geradkettige oder verzweigte, gesättigte oder ungesättigte Alkyl($C_1$-$C_{18}$)-Reste, Polyoxalkylen-Reste, bevorzugt Polyoxethylen- und/oder Polyoxpropylen-Reste, der allgemeinen Formel (Alkylen($C_1$-$C_5$)-O)n-R, worin R ein Wasserstoffatom einen Alkyl($C_1$-$C_4$)-Rest oder einen Acyl-Rest, insbesondere den Acetyl-, Benzoyl- oder Naphthoyl-Rest, und n eine Zahl von 1 bis 10 ist; Phenyl-, Naphthyl- oder Pyridyl-Reste; Tolyl-Reste; Aralkoxy-Reste, insbesondere Methoxyphenyl-Reste; Alkaryl-Reste, insbesondere Benzyl-Reste; oder Cycloalkyl-Reste, vorzugsweise Cyclopentyl- oder Cyclohexylreste,
oder in denen die vorstehend genannten Reste zusätzlich ein oder mehrere Heteroatome, vorzugsweise Stickstoff, Sauerstoff, Schwefel, Phosphor oder eine Kombination davon enthalten,
oder in denen die vorstehend genannten Reste durch einen oder mehrere Carboxamid-Reste, Sulfonamid-Reste, Urethan-Reste, Keto-Reste, primäre, sekundäre oder tertiäre Amino-Reste, Nitro-Reste, Ether-Reste, insbesondere Alkylen($C_2$-$C_4$-O-Alkyl($C_1$-$C_4$), Alkyl($C_1$-$C_4$)-Reste, Alkoxy($C_1$-$C_4$)-Reste, Aroxy-Reste, insbesondere Phenoxy-Reste, Halogenalkyl($C_1$-$C_{30}$)-Reste, Halogenalkoxy($C_1$-$C_{30}$)-Reste, -Reste, Ester-Reste, insbesondere -C(O)O-Alkyl($C_1$-$C_4$), ein oder mehrere Halogenatome, Hydroxyl-, Carboxyl-, Sulfonsäure-, Cyano- oder Mercapto-Gruppen oder durch eine Kombination davon substituiert sind;
oder in denen $R_1$ und $R_2$ sowie gegebenenfalls $R_1$' und $R_2$' zusammen ein gesättigtes oder ungesättigtes, aromatisches oder nichtaromatisches 5- bis 7-gliedriges Ringsystem bilden, vorzugsweise das Pyridinium-Ringsystem, das weitere Heteroatome, bevorzugt Stickstoff, Sauerstoff, Schwefel oder eine Kombination davon, im Ring enthalten kann, insbesondere das Morpholinium-Ringsystem, und das Ringsystem substituiert und/oder durch Ankondensation von oder Verbrückung zu weiteren Ringsystemen modifiziert sein kann, insbesondere das Chinolinium-Ringsystem.

**7.** Verwendung nach mindestens einem der Ansprüche 1 bis 6, dadurch gekennzeichnet, daß das Anion A $CF_3SO_3^-$, $PF_6^-$, $P(Mo_3O_{10})_4^{3-}$, $BF_4^-$, Mono- oder Dithiobenzoat, Halogenid oder $B(Aryl)_4^-$ ist, worin Aryl Phenyl, Naphthyl, Fluorphenyl, Chlorphenyl, Methoxyphenyl, Biphenyl, Pyridyl oder Tolyl oder eine Kombination davon bedeutet, oder ein Alkyl-3,4-disulfomethyl-pyrrolidinium-betain der Formel (III) ist, worin X und Y jeweils $C_1$-$C_5$-Alkylen und $R_1$' und $R_2$' jeweils Wasserstoff oder Methyl bedeuten;
$R_1$ bis $R_{12}$ gleich oder verschieden sind und Wasserstoffatome, geradkettige oder verzweigte, gesättigte oder ungesättigte Alkyl($C_1$-$C_8$)- oder Alkoxy($C_1$-$C_8$)-Reste, Phenyl, Naphthyl oder Pyridyl, Tolyl, Methoxyphenyl, Benzyl, Cyclopentyl oder Cyclohexyl bedeuten, oder wobei die Reste $R_1$ und $R_2$ durch ein oder mehrere Halogenatome oder durch ein oder mehrere der Reste Hydroxyl, Carboxyl, Sulfonsäure, -NH-C(O)-Alkyl($C_1$-$C_4$), -NH-$SO_2$-Alkyl ($C_1$-$C_4$), -C(O)-Alkyl($C_1$-$C_4$), -$NH_2$, -NH[Alkyl($C_1$-$C_4$)], -N[Alkyl($C_1$-$C_4$)]$_2$, Nitro, Alkylen($C_2$-$C_4$)-O-Alkyl($C_1$-$C_4$), Alkyl($C_1$-$C_4$), Alkoxy($C_1$-$C_4$), Phenoxy, Halogenalkyl($C_1$-$C_4$), Halogenalkoxy($C_1$-$C_4$) oder -C(O)O-Alkyl($C_1$-$C_4$) substituiert sind,
das Molekulargewicht zwischen 1000 und 1 000 000 liegt und
das Verhältnis der Anzahl der Diallylammonium-Komponenten und der Anzahl der zweiwertigen $SO_2$-Reste 1:0,1 bis 1:10 beträgt.

**8.** Verwendung nach mindestens einem der Ansprüche 1 bis 7, dadurch gekennzeichnet, daß das Polysulfondiallylammoniumsalz ein oder mehrere der Diallylammonium-Komponenten (1) bis (9) enthält,

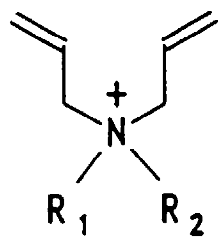

A

(1) bis (9)

wobei

$R_1$ und $R_2$ jeweils die Bedeutungen H oder $CH_3$ haben; und in der Komponente (1) A ein 1-Alkyl-3,4-disulfomethyl-pyrrolidinium-betain der Formel (III) bedeutet, wobei X und Y jeweils Alkyl($C_1$-$C_5$) bedeuten und $R_1$' und $R_2$' jeweils H oder $CH_3$ sind; in der Komponente (2) A die Bedeutung $BF_4^-$ hat;
in der Komponente (3) A die Bedeutung $B(C_6H_5)_4^-$ hat,
in der Komponente (4) A die Bedeutung $PF_6^-$ hat,
in der Komponente (5) A die Bedeutung 1,1-Dialkyl-3,4-disulfomethylpyrrolidinium-betain hat,
in der Komponente (6) A die Bedeutung $P(Mo_3O_{10})_4^{3-}$ hat,
in der Komponente (7) A die Bedeutung $CF_3SO_3^-$ hat,
in der Komponente (8) A die Bedeutung $HSO_4^-$ hat,
in der Komponente (9) A die Bedeutung $Cl^-$ hat, sowie beliebige Mischungen oder Mischkristalle von Polysulfondiallylammoniumsalzen, die zwei oder mehrere der Komponenten (2) bis (9), vorzugsweise zwei oder mehrere der Komponenten (2), (3), (4)und (7) enthalten;

die Molmasse der Polysulfondiallylammoniumsalze zwischen 1000 und 500.000 liegt und das Verhältnis der Anzahl der Diallylammonium-Komponenten und der Anzahl der zweiwertigen $SO_2$-Reste 1:1 beträgt.

**9.** Verwendung nach mindestens einem der Ansprüche 1 bis 8 als ladungsverbesserndes Mittel in triboelektrisch oder elektrokinetisch versprühten Pulverlacken zur Oberflächenbeschichtung von Gegenständen aus Metall, Holz, Kunststoff, Glas, Keramik, Beton, Textilmaterial, Papier oder Kautschuk.

**10.** Verwendung nach mindestens einem der Ansprüche 1 bis 8 als ladungsverbesserndes Mittel in Form von Beschichtungen von Carriern oder Bestandteil von Beschichtungen von Carriern, die in Entwicklern zum elektrophotographischen Kopieren oder Vervielfältigen von Vorlagen sowie zum Drucken von elektronisch, optisch oder magnetisch gespeicherten Informationen oder im Colorproofing eingesetzt werden.

**11.** Verwendung nach mindestens einem der Ansprüche 1 bis 10, dadurch gekennzeichnet, daß man die Polysulfondiallylammoniumsalze einzeln oder in Kombination miteinander in einer Konzentration von 0,01 bis 50 Gew.-%, vorzugsweise von 0,1 bis 5 Gew.-%, bezogen auf die Gesamtmischung, einsetzt.

**12.** Polysulfondiallylammoniumsalz, erhältlich durch

a) Copolymerisation von Salzen, vorzugsweise Halogeniden, der monomeren Diallylammonium-Komponenten der Formel (I) gemäß Anspruch 1 mit Schwefeldioxid oder einer Schwefeldioxid freisetzenden Verbindung, wobei die Diallylammonium-Kationen überwiegend zu einem Pyrrolidinium-Ring cyclisiert sind und durch ein oder mehrere der zweiwertigen Reste $-SO_2-$ miteinander zu Polymeren verbunden sind, und
b) Anionenaustausch, wobei die Anionen, vorzugsweise die Halogenidionen, der Diallylammonium-Komponenten durch die nachstehend genannten Anionen A vollständig oder teilweise ersetzt werden,

wobei die Polysulfondiallylammoniumsalze ein Molekulargewicht zwischen 500 und 5 000 000, vorzugsweise zwischen 1 000 und 1 000 000, insbesondere zwischen 1 000 und 500 000 haben, wobei das Verhältnis der Anzahl der Diallylammonium-Komponenten und der Anzahl der zweiwertigen Reste $-SO_2-$ 1:0,01 bis 1:100, vorzugsweise 1:0,1 bis 1:10, insbesondere 1:1, beträgt, und
wobei die Reste $R_1$ bis $R_{12}$ wie in Anspruch 1, 6 oder 7 beschrieben definiert sind und das Anion A das stöchiometrische Anionenäquivalent einer Heteropolysäure; eines Borats der Formel (II) gemäß Anspruch 1; eines Disulfo-pyrrolidinium-betains der Formel (III) gemäß Anspruch 1; $PF_6^-$ oder Trifluormethylsulfonat sowie ein Gemisch oder ein Mischkristall eines Polysulfondiallylammoniumsalzes mit gemischten Anionen, gemischten Kationen oder gemischten Anionen und Kationen.

**13.** Polysulfondiallylammoniumsalz nach Anspruch 12, dadurch gekennzeichnet, daß die Anionen der Heteropolysäure $P(Mo_3O_{10})_4^{3-}$, $P(W_3O_{10})_4^{3-}$ oder Silicomolybdate sind.

**14.** Polysulfondiallylammoniumsalz nach Anspruch 12, dadurch gekennzeichnet, daß das Borat der Formel (II) Tetrafluoroborat, Tetrachloroborat, Tetraphenylborat, Tetra(fluorphenyl)borat, Tetra(chlorphenyl)borat, Tetratolylborat, Tetranaphthylborat, Tetra(methoxyphenyl)borat, Tetrabiphenylborat, Tetrabenzylborat, Tetra(perfluoroalkyl)phenylborat oder Tetrapyridylborat ist.

**15.** Polysulfondiallylammoniumsalz nach Anspruch 12, dadurch gekennzeichnet, daß in dem Disulfopyrrolidinium-betain der Formel (III) $R_1$' und $R_2$' jeweils die Bedeutung Wasserstoff Alkyl($C_1$-$C_5$), Alkoxy($C_1$-$C_5$), Polyoxalkylen-Reste, bevorzugt Polyoxethylen- oder Polyoxpropylen-Reste, der allgemeinen Formel (Alkylen($C_1$-$C_5$)-O)n-R haben, worin R ein Wasserstoffatom oder einen Alkyl($C_1$-$C_4$)-Rest bedeutet und n eine Zahl von 1 bis 10 ist, und X und Y jeweils Alkylen($C_1$-$C_5$) bedeuten.

**16.** Polysulfondiallylammoniumsalz nach mindestens einem der Ansprüche 12 bis 14, dadurch gekennzeichnet, daß $R_1$ bis $R_{12}$ Wasserstoffatome, geradkettige oder verzweigte, gesättigte oder ungesättigte Alkyl($C_1$-$C_{18}$)-Reste, Polyoxalkylen-Reste, bevorzugt Polyoxethylen- und/oder Polyoxpropylen-Reste, der allgemeinen Formel (Alkylen ($C_1$-$C_5$)-O)n-R, worin R ein Wasserstoffatom einen Alkyl($C_1$-$C_4$)-Rest oder einen Acyl-Rest, insbesondere den Acetyl-, Benzoyl- oder Naphthoyl-Rest, und n eine Zahl von 1 bis 10 ist; Phenyl-, Naphthyl- oder Pyridyl-Reste; Tolyl-Reste; Aralkoxy-Reste, insbesondere Methoxyphenyl-Reste; Alkaryl-Reste, insbesondere Benzyl-Reste; oder Cycloalkyl-Reste, vorzugsweise Cyclopentyl- oder Cyclohexylreste,
oder in denen die vorstehend genannten Reste zusätzlich ein oder mehrere Heteroatome, vorzugsweise Stickstoff, Sauerstoff, Schwefel, Phosphor oder eine Kombination davon enthalten,
oder in denen die vorstehend genannten Reste durch einen oder mehrere Carboxamid-Reste, Sulfonamid-Reste, Urethan-Reste, Keto-Reste, primäre, sekundäre oder tertiäre Amino-Reste, Nitro-Reste, Ether-Reste, insbesondere Alkylen($C_2$-$C_4$)-O-Alkyl($C_1$-$C_4$), Alkyl($C_1$-$C_4$)-Reste, Alkoxy($C_1$-$C_4$)-Reste, Aroxy-Reste, insbesondere Phenoxy-Reste, Halogenalkyl($C_1$-$C_{30}$)-Reste,
Halogenalkoxy($C_1$-$C_{30}$)-Reste, Ester-Reste, insbesondere -C(O)O-Alkyl($C_1$-$C_4$), ein oder mehrere Halogenatome, Hydroxyl-, Carboxyl-, Sulfonsäure-, Cyano- oder Mercapto-Gruppen oder durch eine Kombination davon substituiert sind; oder in denen $R_1$ und $R_2$ sowie gegebenenfalls $R_1$' und $R_2$' zusammen ein gesättigtes oder ungesättigtes, aromatisches oder nichtaromatisches 5- bis 7-gliedriges Ringsystem bilden, vorzugsweise das Pyridinium-Ringsystem, das weitere Heteroatome, bevorzugt Stickstoff, Sauerstoff, Schwefel oder eine Kombination davon, im Ring enthalten kann, insbesondere das Morpholinium-Ringsystem, und das Ringsystem substituiert und/oder durch Ankondensation von oder Verbrückung zu weiteren Ringsystemen modifiziert sein kann, insbesondere das Chinolinium-Ringsystem.

**17.** Polysulfondiallylammoniumsalz nach mindestens einem der Ansprüche 12 bis 16, dadurch gekennzeichnet, daß den Diallylammonium-Komponenten eine oder mehrere der Verbindungen der Formeln (1) bis (7) gemäß Anspruch 8 zugrundeliegen.

**18.** Verfahren zur Herstellung eines Polysulfondiallylammoniumsalzes nach mindestens einem der Anspruche 12 bis 17, dadurch gekennzeichnet, daß man

a) ein Polysulfondiallylammonium-halogenid in Wasser oder in einem Gemisch aus Wasser und einem mit Wasser vollständig oder teilweise mischbaren organischen Lösungsmittel löst,
b) die nach a) hergestellte Lösung mit einer oder mehreren dem Anion A zugrundeliegenden Verbindung(en) bei einer Temperatur zwischen 0°C und 100°C und einem pH-Wert zwischen 3 und 10 versetzt,
c) anschließend das entstandene Polysulfondiallylammoniumsalz gegebenenfalls durch Aussalzen mit einem halogenhaltigen Salz ausfällt,
d) das ausgefällte Polysulfondiallylammoniumsalz weitgehend von anorganischen Salzen befreit und anschließend
e) im Vakuum bei erhöhter Temperatur trocknet.

**Claims**

1. The use of polysulfonyldiallylammonium salts which are obtainable by

a) copolymerization of salts of monomeric diallylammonium components of the formula (I)

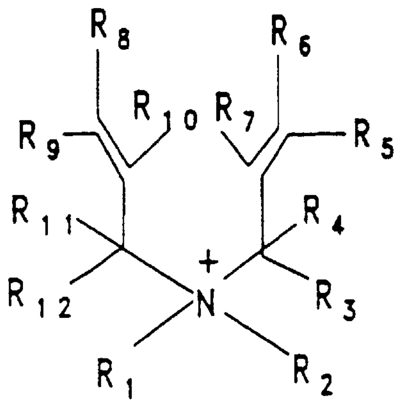

(I)

with sulfur dioxide or a compound which liberates sulfur dioxide, and
b) anion exchange, the anions of the diallylammonium components being completely or partially replaced by the anions A,

the diallylammonium components being in each case cyclized to give a five- or six-membered ring and being connected to one another by one or more divalent radicals $-SO_2-$ to form polymers,
the polysulfonyldiallylammonium salts having a molecular weight of between 500 and 5,000,000,
the ratio of the number of diallylammonium components to the number of divalent $SO_2$ radicals being from 1:0.01 to 1:100,
the radicals $R_1$ to $R_{12}$ being identical or different and being a hydrogen atom, a halogen atom, a hydroxyl radical, a primary, secondary or tertiary amino radical, a carboxyl or carboxylate radical, an acyl radical, a sulfo or sulfonate radical, a cyano or nitro radical, or a radical of a $C_1$-$C_{30}$-aliphatic, $C_7$-$C_{60}$-araliphatic or $C_6$-$C_{30}$-aromatic hydrocarbon which may be interrupted by heteroatoms, and

A is in each case the stoichiometric anion equivalent of an anion from the group consisting of $NO_3^-$, $OH^-$, $HSO_4^-$, $SO_4^{2-}$, $HSO_3^-$, $S_2^-$, $S^{2-}$, $SO_3^{2-}$, $S_2O_3^{2-}$, $HCO_3^-$, $CO_3^{2-}$, $H_2PO_4^-$, $HPO_4^{2-}$, $PO_4^{3-}$, $CN^-$, $CF_3SO_3^-$, $CF_3COO^-$, cyanate, isocyanate, $F^-$, $Cl^-$, $Br^-$, $I^-$, thiocyanate, tetracyanozincate, tetrathiocyanozincate, perchlorate, $PF_6^-$, $MoO_4^{2-}$, $MoS_4^{2-}$, $WO_4^{2-}$ or
of an anion of a heteropolyacid or
of a borate of the formula (II)

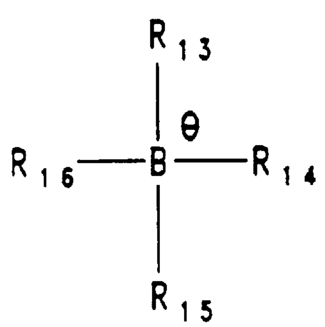

(II)

the radicals $R_{13}$ to $R_{16}$ being identical or different and being $C_1$-$C_{30}$-aliphatic or $C_3$-$C_{10}$-cycloaliphatic radicals, aryl, heteroaryl or aralkyl radicals which may be substituted by alkyl($C_1$-$C_4$), alkoxy($C_1$-$C_4$) or aryl radicals or by halogen atoms, or being fluorine atoms;
or of an anion from the group consisting of phenolate; olefinic, aliphatic or aromatic carboxylate, thiolate, sulfonate or sulfate, in which the alkyl, alkenyl or aryl radicals may also be perfluorinated;
or of a disulfopyrrolidinium betaine of the formula (III)

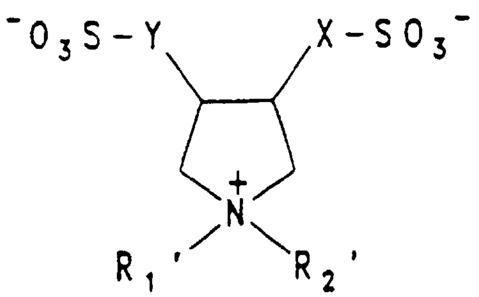

(III)

$R_1$' and $R_2$' having the meanings given for $R_1$ and $R_2$ and X and Y each being a straight-chain or branched aliphatic, saturated or unsaturated alkylene($C_1$-$C_{18}$) radical or alkoxylene($C_1$-$C_{18}$) radical;
or A is a combination of the abovementioned anions; individually or in combination as charge control agents in electrophotographic toners and developers which are employed for copying and reproducing originals and for printing electronically, magnetically or optically stored information or in colorproofing, and as charge control agents in powders and powder coatings.

2. The use as claimed in claim 1, wherein the anions of the heteropolyacid are $P(Mo_3O_{10})_4^{3-}$, $P(W_3O_{10})_4^{3-}$ or silicomolybdates.

3. The use as claimed in claim 1, wherein the borate of the formula (II) is tetrafluoroborate, tetrachloroborate, tetraphenylborate, tetra(fluorophenyl)borate, tetra(chlorophenyl)borate, tetratolylborate, tetranaphthylborate, tetra (methoxyphenyl)borate, tetrabiphenylborate, tetrabenzylborate, tetra(perfluoroalkyl)phenylborate or tetrapyridylborate.

4. The use as claimed in claim 1, wherein the anion is formate, lactate, tartrate, benzoate, phthalate, terephthalate, isophthalate, sulfoisophthalate, salicylate, 2-hydroxy-3-naphthoate, 2-hydroxy-6-naphthoate, ethylsulfonate, phenylsulfonate, tosylate, perfluoroacetate, perfluoro($C_1$-$C_{30}$)-alkylbenzoate, perfluoroethylsulfonate, perfluoro($C_1$-$C_{30}$)-alkylbenzenesulfonate, citrate, oxalate or succinate.

5. The use as claimed in claim 1, wherein, in the disulfopyrrolidinium betaine of the formula (III), $R_1$' and $R_2$' each have the meaning hydrogen, alkyl($C_1$-$C_5$), alkoxy($C_1$-$C_5$), polyoxyalkylene radicals, preferably polyoxyethylene or polyoxypropylene radicals, of the formula (alkylene($C_1$-$C_5$)-O)$_n$-R in which R is a hydrogen atom or an alkyl($C_1$-$C_4$) radical and n is a number from 1 to 10, and X and Y are each alkylene($C_1$-$C_5$).

6. The use as claimed in at least one of claims 1 to 5, wherein $R_1$ to $R_{12}$ are hydrogen atoms, straight-chain or branched, saturated or unsaturated alkyl($C_1$-$C_{18}$) radicals, polyoxyalkylene radicals, preferably polyoxyethylene and/or polyoxypropylene radicals, of the formula (alkylene($C_1$-$C_5$)-O)$_n$-R in which R is a hydrogen atom, an alkyl ($C_1$-$C_4$) radical or an acyl radical, in particular the acetyl, benzoyl or naphthoyl radical, and n is a number from 1 to 10; phenyl, naphthyl or pyridyl radicals; tolyl radicals; aralkoxy radicals, in particular methoxyphenyl radicals; alkaryl radicals, in particular benzyl radicals; or cycloalkyl radicals, preferably cyclopentyl or cyclohexyl radicals, or in which the abovementioned radicals additionally contain one or more heteroatoms, preferably nitrogen, oxygen, sulfur, phosphorus or a combination thereof,
or in which the abovementioned radicals are substituted by one or more carboxamide radicals, sulfonamide radicals, urethane radicals, keto radicals, primary, secondary or tertiary amino radicals, nitro radicals, ether radicals, in particular alkylene-($C_2$-$C_4$)-O-alkyl($C_1$-$C_4$), alkyl($C_1$-$C_4$) radicals, alkoxy($C_1$-$C_4$) radicals, aroxy radicals, in particular phenoxy radicals, haloalkyl($C_1$-$C_{30}$) radicals, haloalkoxy($C_1$-$C_{30}$) radicals, ester radicals, in particular -C(O)O-alkyl($C_1$-$C_4$), one or more halogen atoms, hydroxyl, carboxyl, sulfo, cyano or mercapto groups, or by a combination thereof;

or in which $R_1$ and $R_2$ and, if appropriate, $R_1'$ and $R_2'$ together form a saturated or unsaturated, aromatic or nonaromatic 5- to 7-membered ring system, preferably the pyridinium ring system, which may contain further heteroatoms, preferably nitrogen, oxygen, sulfur or a combination thereof, in the ring, in particular the morpholinium ring system, and the ring system may be substituted and/or modified by being fused with or connected by a bridge to other ring systems, in particular the quinolinium ring system.

**7.** The method as claimed in at least one of claims 1 to 6, wherein the anion A is $CF_3SO_3^-$, $PF_6^-$, $P(Mo_3O_{10})_4^{3-}$, $BF_4^-$, mono- or dithiobenzoate, halide or $B(aryl)_4^-$ in which aryl is phenyl, naphthyl, fluorophenyl, chlorophenyl, methoxyphenyl, biphenyl, pyridyl or tolyl or a combination thereof, or is an alkyl-3,4-disulfomethylpyrrolidinium betaine of the formula (III) in which X and Y are each $C_1$-$C_5$-alkylene and $R_1'$ and $R_2'$ are each hydrogen or methyl;
$R_1$ to $R_{12}$ are identical or different and are hydrogen atoms, straight-chain or branched, saturated or unsaturated alkyl($C_1$-$C_8$) or alkoxy($C_1$-$C_8$) radicals, phenyl, naphthyl or pyridyl, tolyl, methoxyphenyl, benzyl, cyclopentyl or cyclohexyl, or in which the radicals $R_1$ and $R_2$ are substituted by one or more halogen atoms or by one or more of the radicals hydroxyl, carboxyl, sulfo, -NH-C(O)-alkyl-($C_1$-$C_4$), -NH-$SO_2$-alkyl($C_1$-$C_4$), -C(O)-alkyl($C_1$-$C_4$), -$NH_2$, -NH[alkyl($C_1$-$C_4$)], -N[alkyl($C_1$-$C_4$)]$_2$, nitro, alkylene($C_2$-$C_4$)-O-alkyl($C_1$-$C_4$), alkyl($C_1$-$C_4$), alkoxy-($C_1$-$C_4$), phenoxy, haloalkyl($C_1$-$C_4$), haloalkoxy($C_1$-$C_4$) or -C(O)O-alkyl($C_1$-$C_4$),
the molecular weight is between 1000 and 1,000,000 and
the ratio of the number of diallylammonium components to the number of divalent $SO_2$ radicals is from 1:0.1 to 1:10.

**8.** The use as claimed in at least one of claims 1 to 7, wherein the polysulfonyldiallylammonium salt contains one or more of the diallylammonium components (1) to (9)

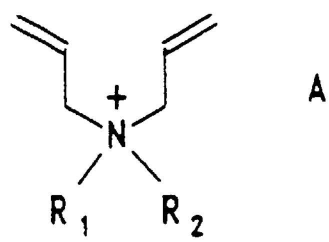

(1) to (9)

in which $R_1$ and $R_2$ each have the meanings H or $CH_3$, and
in component (1) A is a 1-alkyl-3,4-disulfomethylpyrrolidinium betaine of the formula (III) in which X and Y are each alkyl($C_1$-$C_5$) and $R_1'$ and $R_2'$ are each H or $CH_3$,
in component (2) A has the meaning $BF_4^-$,
in component (3) A has the meaning $B(C_6H_5)_4^-$,
in component (4) A has the meaning $PF_6^-$,
in component (5) A has the meaning 1,1-dialkyl-3,4-disulfomethylpyrrolidinium betaine,
in component (6) A has the meaning $P(Mo_3O_{10})_4^{3-}$,
in component (7) A has the meaning $CF_3SO_3^-$,
in component (8) A has the meaning $HSO_4^-$,
in component (9) A has the meaning $Cl^-$, and any desired mixtures or mixed crystals of polysulfonyldiallylammonium salts which contain two or more of the components (2) to (9), preferably two or more of the components (2), (3), (4) and (7);

the molecular mass of the polysulfonyldiallylammonium salts is between 1000 and 500,000 and the ratio of the number of diallylammonium components to the number of divalent $SO_2$ radicals is 1:1.

**9.** The use as claimed in at least one of claims 1 to 8 as a charge-improving agent in triboelectrically or electrokinetically sprayed powder coatings for the surface coating of articles of metal, wood, plastic, glass, ceramic, concrete, textile material, paper or rubber.

**10.** The use as claimed in at least one of claims 1 to 8 as a charge-improving agent in the form of coatings of carriers or a component of coatings of carriers which are employed in developers for the electrophotographic copying or reproduction of originals and for the printing of electronically, optically or magnetically stored information or in colorproofing.

**11.** The use as claimed in at least one of claims 1 to 10, wherein the polysulfonyldiallylammonium salts are employed individually or in combination with one another in a concentration of from 0.01 to 50% by weight, preferably from 0.1 to 5% by weight, based on the total mixture.

**12.** A polysulfonyldiallylammonium salt which is obtainable by

a) copolymerization of salts, preferably halides, of the monomeric diallylammonium components of the formula (I) as in claim 1 with sulfur dioxide or a compound which liberates sulfur dioxide, the diallylammonium cations being cyclized predominantly to form a pyrrolidinium ring and being connected to one another by one or more of the divalent radicals $-SO_2-$ to form polymers, and
b) anion exchange, the anions, preferably the halide ions, of the diallylammonium components being completely or partially replaced by the anions A mentioned below,

the polysulfonyldiallylammonium salts having a molecular weight of between 500 and 5,000,000, preferably between 1000 and 1,000,000, in particular between 1000 and 500,000, the ratio of the number of diallylammonium components to the number of divalent radicals $-SO_2-$ being from 1:0.01 to 1:100, preferably from 1:0.1 to 1:10, in particular 1:1, and
the radicals $R_1$ to $R_{12}$ being defined as described in claim 1, 6 or 7 and the anion A being the stoichiometric anion equivalent of a heteropolyacid; of a borate of the formula (II) as in claim 1; of a disulfopyrrolidinium betaine of the formula (III) as in claim 1; $PF_6^-$ or trifluoromethylsulfonate; and a mixture or a mixed crystal of a polysulfonyldiallylammonium salt with mixed anions, mixed cations or mixed anions and cations.

**13.** A polysulfonyldiallylammonium salt as claimed in claim 12, wherein the anions of the heteropolyacid are $P(Mo_3O_{10})_4^{3-}$, $P(W_3O_{10})_4^{3-}$ or silicomolybdates.

**14.** A polysulfonyldiallylammonium salt as claimed in claim 12, wherein the borate of the formula (II) is tetrafluoroborate, tetrachloroborate, tetraphenylborate, tetra(fluorophenyl)borate, tetra(chlorophenyl)borate, tetratolylborate, tetranaphthylborate, tetra(methoxyphenyl)borate, tetrabiphenylborate, tetrabenzylborate, tetra(perfluoroalkyl)phenylborate or tetrapyridylborate.

**15.** A polysulfonyldiallylammonium salt as claimed in claim 12, wherein, in the disulfopyrrolidinium betaine of the formula (III), $R_1'$ and $R_2'$ each have the meaning hydrogen, alkyl($C_1$-$C_5$), alkoxy($C_1$-$C_5$), polyoxyalkylene radicals, preferably polyoxyethylene or polyoxypropylene radicals, of the formula (alkylene($C_1$-$C_5$)-O)$_n$-R in which R is a hydrogen atom or an alkyl($C_1$-$C_4$) radical and n is a number from 1 to 10, and X and Y are each alkylene($C_1$-$C_5$).

**16.** A polysulfonyldiallylammonium salt as claimed in at least one of claims 12 to 14, wherein $R_1$ to $R_{12}$ are hydrogen atoms, straight-chain or branched, saturated or unsaturated alkyl($C_1$-$C_{18}$) radicals, polyoxyalkylene radicals, preferably polyoxyethylene and/or polyoxypropylene radicals, of the formula (alkylene($C_1$-$C_5$)-O)$_n$-R in which R is a hydrogen atom, an alkyl($C_1$-$C_4$) radical or an acyl radical, in particular the acetyl, benzoyl or naphthoyl radical, and n is a number from 1 to 10; phenyl, naphthyl or pyridyl radicals; tolyl radicals; aralkoxy radicals, in particular methoxyphenyl radicals; alkaryl radicals, in particular benzyl radicals; or cycloalkyl radicals, preferably cyclopentyl or cyclohexyl radicals,
or in which the abovementioned radicals additionally contain one or more heteroatoms, preferably nitrogen, oxygen, sulfur, phosphorus or a combination thereof,
or in which the abovementioned radicals are substituted by one or more carboxamide radicals, sulfonamide radicals, urethane radicals, keto radicals, primary, secondary or tertiary amino radicals, nitro radicals, ether radicals, in particular alkylene($C_2$-$C_4$)-O-alkyl($C_1$-$C_4$), alkyl($C_1$-$C_4$) radicals, alkoxy($C_1$-$C_4$) radicals, aroxy radicals, in particular phenoxy radicals, haloalkyl($C_1$-$C_{30}$) radicals, haloalkoxy($C_1$-$C_{30}$) radicals, ester radicals, in particular -C(O)O-alkyl($C_1$-$C_4$), one or more halogen atoms, hydroxyl, carboxyl, sulfo, cyano or mercapto groups, or by a combination thereof;
or in which $R_1$ and $R_2$ and, if appropriate, $R_1'$ and $R_2'$ together form a saturated or unsaturated, aromatic or nonaromatic 5- to 7-membered ring system, preferably the pyridinium ring system, which may contain further heteroatoms, preferably nitrogen, oxygen, sulfur or a combination thereof, in the ring, in particular the morpholinium ring system, and the ring system may be substituted and/or modified by being fused with or connected by a bridge to other ring systems, in particular the quinolinium ring system.

**17.** A polysulfonyldiallylammonium salt as claimed in at least one of claims 12 to 16, wherein the diallylammonium components are based on one or more of the compounds of the formulae (1) to (7) as set forth in claim 8.

18. A process for the preparation of a polysulfonyldiallylammonium salt as claimed in at least one of claims 12 to 17, which comprises

a) dissolving a polysulfonyldiallylammonium halide in water or in a mixture of water and an organic solvent which is completely or partially miscible with water,
b) adding to the solution prepared in a) one or more compounds on which the anion A is based, at a temperature of between 0°C and 100°C and a pH of between 3 and 10,
c) then precipitating the resulting polysulfonyldiallylammonium salt, if necessary, by salting out with a halogen-containing salt,
d) largely freeing the precipitated polysulfonyldiallylammonium salt from inorganic salts, and subsequently
e) drying the product in vacuo at elevated temperature.

**Revendications**

1. Utilisation de sels de polysulfone-diallylammonium que l'on peut obtenir

a) par copolymérisation de sels, de préférence d'halogénures, de composants diallylammonium monomères de formule (I)

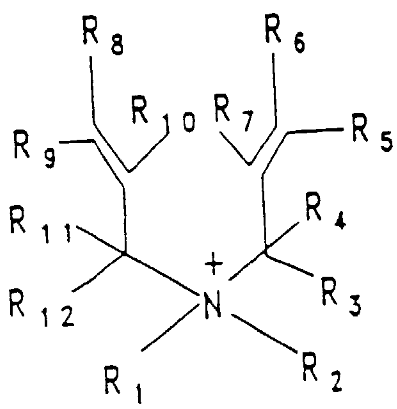

(I)

avec le dioxyde de soufre ou un composé qui libère le dioxyde de soufre, et
b) par échange d'anions, les anions du composant diallylammonium étant remplacés entièrement ou partiellement par des anions A,

les composants diallylammonium étant à chaque fois cyclisés en un cycle à 5 ou 6 chaînons et reliés entre eux par un ou plusieurs restes bivalents $-SO_2-$ pour former un polymère,
les sels de polysulfone-diallylammonium ayant une masse molaire comprise entre 500 et 5 000 000,
le rapport entre le nombre des composants diallylammonium et le nombre des restes $-SO_2-$ bivalents étant de 1: 0,01 à 1:100,
les restes $R_1$ à $R_{12}$ étant identiques ou différents représentent un atome d'hydrogène, un atome d'halogène, un reste hydroxyle, un reste amino primaire, secondaire ou tertiaire, un reste acide carboxylique ou ester d'acide carboxylique, un reste acyle, un reste acide sulfonique ou ester d'acide sulfonique, un reste cyano ou nitro, un reste d'un hydrocarbure aliphatique en $C_1$-$C_{30}$, araliphatique en $C_7$-$C_{60}$ ou aromatique en $C_6$-$C_{30}$, qui peut être interrompu par des hétéroatomes,
A étant à chaque fois l'équivalent anionique stoechiométrique d'un anion pris dans le groupe comportant
$NO_3^-$, $OH^-$, $HSO_4^-$, $SO_4^{2-}$, $HSO_3^-$, $S_2^-$, $S^{2-}$, $SO_3^{2-}$, $S_2O_3^{2-}$, $HCO_3^-$, $CO_3^{2-}$, $H_2PO_4^-$, $HPO_4^{2-}$, $PO_4^{3-}$, $CN^-$, $CF_3SO_3^-$, $CF_3COO^-$, cyanate, isocyanate, $F^-$, $Cl^-$, $Br^-$, $I^-$, thiocyanate, tétracyante de zinc, tétrathiocyanate de zinc, perchlorate, $PF_6^-$, $MoO_4^{2-}$, $MoS_4^{2-}$, $WO_4^{2-}$, ou
d'un anion d'un hétéropolyacide ou
d'un borate de formule générale (II)

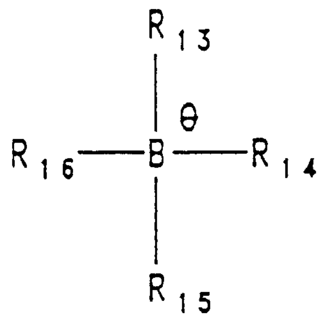

(II)

les restes $R_{13}$ à $R_{16}$ étant identiques ou différents et représentent des restes aliphatiques en $C_1$-$C_{30}$, cycloaliphatiques en en $C_3$-$C_{10}$, des restes aryle ou hétéroaryle ou aralkyle, ces restes pouvant être substitués par des restes alkyle en $C_1$-$C_4$, alkoxy en $C_1$-$C_4$ ou aryle ou par des atomes d'halogène, ou représentent des atomes de fluor ;
ou d'un anion pris parmi les groupes phénolate, carboxylate oléfinique, aliphatique ou aromatique, thiolate, sulfonate ou sulfate, dans lesquels les restes alkyle, alcényle ou aryle peuvent être perfluorés également ;
ou d'une disulfo-pyrrolidinium-bétaïne de formule générale (III)

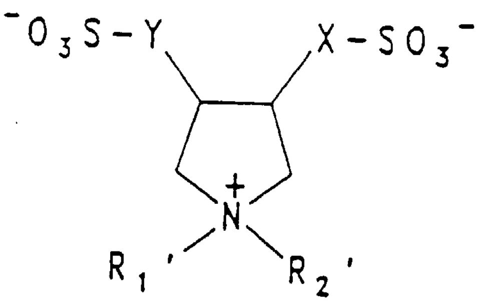

(III)

$R_1'$ et $R_2'$ ayant les significations données pour $R_1$ et $R_2$ et X et Y étant chacun un reste alkoxylène en $C_1$-$C_{18}$ ou un reste alkylène en $C_1$-$C_{18}$ aliphatique, saturé ou insaturé ;
ou A représente une combinaison des anions précités ; seuls ou en combinaison, comme agents de contrôle de charge dans des toners et révélateurs électro-photographiques que l'on utilise pour la copie et la multicopie de modèles, ainsi que pour l'impression d'informations stockées sur des supports électroniques, magnétiques ou optiques, ou dans les épreuves en couleur, ainsi que comme agent de contrôle de charge dans des poudres et vernis en poudre.

**2.** Utilisation selon la revendication 1, caractérisée en ce que les anions hétéropolyacide sont $P(Mo_3O_{10})_4^{3-}$, $P(W_3O_{10})_4^{3-}$ ou silicomolybdates.

**3.** Utilisation selon la revendication 1, caractérisée en ce que le borate de formule (II) est un tétrafluoroborate, tétrachloroborate, tétraphénylborate, tétra(fluorophényl)borate, tétra(chlorophényl)borate, tétratolylborate, tétranaphtylborate, tétra(méthoxyphényl)borate, tétrabiphénylborate, tétrabenzylborate, tétra(perfluoroalkyl)phénylborate ou tétrapyridylborate.

**4.** Utilisation selon la revendication 1, caractérisée en ce que l'anion est formiate, lactate, tartrate, benzoate, phtalate, téréphtalate, isophtalate, sulfoisophtalate, salicylate, 2-hydroxy-3-naphtoate, 2-hydroxy-6-naphtoate, éthylsulfonate, phénylsulfonate, tosylate, perfluoroacétate, perfluoro(alkyl en $C_1$-$C_{30}$)-benzoate, perfluoroéthylsulfonate ou perfluoro(alkyl en $C_1$-$C_{30}$)benzènesulfonate, citrate, oxalate ou succinate.

**5.** Utilisation selon la revendication 1, caractérisée en ce que dans la disulfopyrrolidinium-bétaïne de formule (III), $R_1'$ et $R_2'$ représentent chacun un atome d'hydrogène, des restes alkyle en $C_1$-$C_5$, alkoxy en $C_1$-$C_5$, des restes polyoxyalkylène, de préférence polyoxyéthylène ou polyoxypropylène, de formule générale ((alkylène en $C_1$-$C_5$)-O)n-R, dans laquelle R représente un atome d'hydrogène ou un reste alkyle en $C_1$-$C_4$ et n est un nombre de 1 à 10, et X et Y représentent chacun alkylène en $C_1$-$C_5$.

6. Utilisation selon au moins l'une des revendications 1 à 5, caractérisée en ce que $R_1$ à $R_{12}$ représentent des atomes d'hydrogène, des restes alkyle en $C_1$-$C_{18}$ linéaires ou ramifiés, saturés ou insaturés, des restes polyoxyalkylène, de préférence polyoxyéthylène et/ou polyoxypropylène, de formule générale ((alkylène en $C_1$-$C_5$)-O)n-R, dans laquelle R représente un atome d'hydrogène, un reste alkyle en $C_1$-$C_4$ ou un reste acyle, en particulier le reste acétyle, benzoyle ou naphtoyle, et n est un nombre de 1 à 10 ; des restes phényle, naphtyle ou pyridyle ; des reste tolyle ; des restes aralkoxy, en particulier des restes méthoxyphényle ; des restes alkaryle, en particuler des restes benzyle ; ou des restes cycloalkyle, de préférence cyclopentyle ou cyclohexyle,
ou dans lesquels les restes précités contiennent de plus un ou plusieurs hétéroatomes, de préférence l'azote, l'oxygène, le soufre, le phosphore ou une combinaison de ces atomes,
ou dans lesquels les restes précités sont substitués par un ou plusieurs restes carboxamido, restes sulfamido, restes uréthanne, restes céto, restes amino primaires, secondaires ou tertiaires, restes nitro, restes éther, en particulier restes (alkylène en $C_2$-$C_4$)-O-(alkyle en $C_1$-$C_4$), restes alkyle en $C_1$-$C_4$, restes alkoxy en $C_1$-$C_4$, restes aroxy, en particulier restes phénoxy, restes halogénoalkyle en $C_1$-$C_{30}$, restes halogénoalkoxy en $C_1$-$C_{30}$, restes ester, en particulier -C(O)O-alkyle en $C_1$-$C_4$, un ou plusieurs atomes d'halogène, des groupes hydroxyle, carboxyle, acide sulfonique, cyano ou mercapto ou une de leurs combinaisons ; ou dans lesquels $R_1$ et $R_2$ ainsi qu'éventuellement $R_1'$ et $R_2'$ ensemble forment un système cyclique de 5 à 7 chaînons aromatique ou non aromatique, saturé ou insaturé, de préférence le système cyclique pyridinium, qui peut contenir d'autres hétéroatomes dans le cycle, de préférence l'azote, l'oxygène, le soufre ou une de leurs combinaisons, en particulier le système cyclique morpholinium, et le système cyclique pouvant être substitué et/ou modifié par condensation ou par pontage à d'autres systèmes cycliques, en particulier le système cyclique quinolinium.

7. Utilisation selon au moins l'une des revendications 1 à 6, caractérisée en ce que l'anion A représente $CF_3SO_3^-$, $PF_6^-$, $P(Mo_3O_{10})_4^{3-}$, $BF_4^-$, mono- ou dithiobenzoate, halogénure ou $B(aryl)_4^-$, dans lequel aryle représente phényle, naphtyle, fluorophényle, chlorophényle, méthoxyphényle, biphényle, pyridyle ou tolyle ou une de leurs combinaisons, ou est une alkyl-3,4-disulfométhyl-pyrrolidinium-bétaïne de formule (III), dans laquelle X et Y chacun représente alkylène en $C_1$-$C_5$ et $R_1'$ et $R_2'$ chacun représente un atome d'hydrogène ou un groupe méthyle ;
$R_1$ à $R_{12}$ sont identiques ou différents et représentent des atomes d'hydrogène, des restes alkyle en $C_1$-$C_8$ ou alkoxy en $C_1$-$C_8$, saturés ou insaturés, linéaires ou ramifiés, des groupes phényle, naphtyle ou pyridyle, tolyle, méthoxyphényle, benzyle, cyclopentyle ou cyclohexyle, ou les restes $R_1$ et $R_2$ étant substitués par un ou plusieurs atomes d'halogène ou par un ou plusieurs restes hydroxyle, carboxyle, acide sulfonique, -NH-C(O)-(alkyle en $C_1$-$C_4$), -NH-$SO_2$-(alkyle en $C_1$-$C_4$), -C(O)-(alkyle en $C_1$-$C_4$), -$NH_2$, -NH-[(alkyle en $C_1$-$C_4$)], -N[(alkyle en $C_1$-$C_4$)]$_2$, nitro, (alkylène en $C_2$-$C_4$)-O-(alkyle en $C_1$-$C_4$), alkyle en $C_1$-$C_4$, alkoxy en $C_1$-$C_4$, phénoxy, halogénoalkyle en $C_1$-$C_4$, halogénoalkoxy en $C_1$-$C_4$ ou -C(O)O-(alkyle en $C_1$-$C_4$),
la masse molaire est comprise entre 1 000 et 1 000 000 et
le rapport entre le nombre de composants diallylammonium et le nombre des restes $SO_2$- bivalents est de 1:0,1 à 1:10.

8. Utilisation selon au moins l'une des revendications 1 à 7, caractérisée en ce que le sel de polysulfone-diallylammonium contient un ou plusieurs composants diallylammonium (1) à (9)

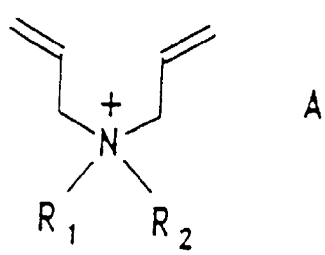

(1) à (9)

$R_1$ et $R_2$, chacun ayant les significations de H ou $CH_3$ ; et
dans le composant (1), A représente une 1-alkyl-3,4-disulfométhyl-pyrrolidinium-bétaïne de formule (III), X et Y chacun représente alkyle en $C_1$-$C_5$ et $R_1'$ et $R_2'$ chacun représente H ou $CH_3$ ;
dans le composant (2) A signifie $BF_4^-$,
dans le composant (3) A signifie $B(C_6H_5)_4^-$,
dans le composant (4) A signifie $PF_6^-$, dans le composant (5) A signifie la 1,1-dialkyl-3,4-disulfométhylpyrrolidinium-bétaïne,
dans le composant (6) A signifie $P(Mo_3O_{10})_4^{3-}$,
dans le composant (7) A signifie $CF_3SO_3^-$,
dans le composant (8) A signifie $HSO_4^-$,
dans le composant (9) A signifie $Cl^-$, ainsi que des mélanges ou cristaux mixtes arbitraires de sels de polysulfone-diallylammonium, qui contiennent deux ou plusieurs des composants (2) à (9), de préférence deux ou plusieurs des composants (2), (3), (4) et (7) ;
la masse molaire des sels de polysulfone-diallylammonium est comprise entre 1 000 et 500 000 et le rapport entre le nombre des composants diallylammonium et le nombre des restes $SO_2$ bivalents est de 1:1.

**9.** Utilisation selon au moins l'une des revendications 1 à 8 comme agent d'amélioration de charge des vernis en poudre appliqués par pulvérisation triboélectrique ou électrocinétique pour le revêtement de surface d'objets métalliques, en bois, en matières plastiques, en verre, en céramique, en béton, en matières textiles, en papier ou en caoutchouc.

**10.** Utilisation selon au moins l'une des revendications 1 à 8 en tant qu'agent d'amélioration de charge sous forme de revêtements de véhicules ou de constituants de revêtement de véhicules, que l'on utilise dans des révélateurs pour la copie électrophotographique ou la multicopie de modèles ainsi que pour l'impression d'informations stockées sur des supports électroniques, optiques ou magnétiques ou dans les épreuves couleur.

**11.** Utilisation selon l'une des revendications 1 à 10, caractérisée en ce que l'on utilise les sels de polysulfone-diallylammonium seuls ou en combinaison entre eux, dans une concentration de 0,01 à 50 % en poids, de préférence de 0,1 à 5 % en poids, par rapport au poids total du mélange.

**12.** Sel de polysulfone-diallylammonium que l'on peut obtenir

a) par copolymérisation de sels, de préférences d'halogénures, des composants monomères diallylammonium de formule (I) avec le dioxyde de soufre ou un composé qui libère le dioxyde de soufre, les cations diallylammonium étant cyclisés en majorité en un cycle pyrrolidinium et reliés les uns aux autres par un ou plusieurs restes $-SO_2-$ bivalents, et
b) par échange d'anions, les anions, de préférence les ions halogénure, du composant diallylammonium étant remplacés entièrement ou partiellement par des anions A cités ci-après,

les sels de polysulfone-diallylammonium ayant une masse molaire comprise entre 500 et 5 000 000, de préférence entre 1 000 et 1 000 000, en particulier entre 1 000 et 500 000, le rapport entre le nombre des composants diallylammonium et le nombre des restes $-SO_2-$ bivalents étant de 1:0,01 à 1:100, de préférence de 1:0,1 à 1:10, en particulier de 1:1, et
les restes $R_1$ à $R_{12}$ étant définis dans les revendications 1, 6 ou 7, et l'anion A étant l'équivalent anionique stoechiométrique d'un hétéropolyacide ; d'un borate de formule (II) selon la revendication 1 ; d'une disulfo-pyrrolidinium-bétaïne de formule (III) selon la revendication 1 ; $PF_6^-$ ou trifluorométhylsulfonate, ainsi qu'un mélange ou un cristal mixte d'un sel de polysulfone-diallylammonium avec des anions mixtes, des cations mixtes ou des anions et cations mixtes.

**13.** Sel de polysulfone-diallylammonium selon la revendication 12, caractérisé en ce que les anions sont des hétéropolyacides $P(Mo_3O_{10})_4^{3-}$, $P(W_3O_{10})_4^{3-}$ et silicomolybdates.

**14.** Sel de polysulfone-diallylammonium selon la revendication 12, caractérisé en ce que le borate de formule (II) est le tétrafluoroborate, le tétrachloroborate, le tétraphénylborate, le tétra(fluorophényl)borate, le tétra(chlorophényl) borate, le tétratolylborate, le tétranaphtylborate, le tétra(méthoxyphényl)borate, le tétrabiphénylborate, le tétrabenzylborate, le tétra(perfluoroalkyl)phénylborate ou le tétrapyridylborate.

**15.** Sel de polysulfone-diallylammonium selon la revendication 12, caractérisé en ce que dans la disulfopyrrolidinium-bétaïne de formule (III), $R_1'$ et $R_2'$ représentent chacun un atome d'hydrogène, des restes alkyle en $C_1$-$C_5$, alkoxy en $C_1$-$C_5$, des restes polyoxyalkylène, de préférence polyoxyéthylène ou polyoxypropylène, de formule générale ((alkylène en $C_1$-$C_5$)-O)n-R, dans laquelle R représente un atome d'hydrogène ou un reste alkyle en $C_1$-$C_4$ et n est un nombre de 1 à 10, et X et Y représentent chacun alkylène en $C_1$-$C_5$.

**16.** Sel de polysulfone-diallylammonium selon l'une des revendications 12 à 14, caractérisé en ce que $R_1$ à $R_{12}$ re-

présentent des atomes d'hydrogène, des restes alkyle en $C_1$-$C_{18}$ linéaires ou ramifiés, saturés ou insaturés, des restes polyoxyalkylène, de préférence polyoxyéthylène et/ou polyoxypropylène, de formule générale ((alkylène en $C_1$-$C_5$)-O)n-R, dans laquelle R représente un atome d'hydrogène, un reste alkyle en $C_1$-$C_4$ ou un reste acyle, en particulier le reste acétyle, benzoyle ou naphtoyle, et n est un nombre de 1 à 10 ; des restes phényle, naphtyle ou pyridyle ; des restes tolyle ; des restes aralkoxy, en particulier des restes méthoxyphényle ; des restes alkaryle, en particuler des restes benzyle ; ou des restes cycloalkyle, de préférence cyclopentyle ou cyclohexyle,
ou dans lesquels les restes précités contiennent de plus un ou plusieurs hétéroatomes, de préférence l'azote, l'oxygène, le soufre, le phosphore ou une combinaison de ces atomes,
ou dans lesquels les restes précités sont substitués par un ou plusieurs restes carboxamido, restes sulfamido, restes uréthanne, restes céto, restes amino primaires, secondaires ou tertiaires, restes nitro, restes éther, en particulier restes (alkylène en $C_2$-$C_4$)-O-(alkyle en $C_1$-$C_4$), restes alkyle en $C_1$-$C_4$, restes alkoxy en $C_1$-$C_4$, restes aroxy, en particulier restes phénoxy, restes halogénoalkyle en $C_1$-$C_{30}$, restes halogénoalkoxy en $C_1$-$C_{30}$, restes ester, en particulier -C(O)O-alkyle en $C_1$-$C_4$, un ou plusieurs atomes d'halogène, groupes hydroxyle, carboxyle, acide sulfonique, cyano ou mercapto ou par une de leurs combinaisons ; ou dans lesquels $R_1$ et $R_2$ ainsi qu'éventuellement $R_1'$ et $R_2'$ ensemble forment un système cyclique de 5 à 7 chaînons, aromatique ou non aromatique, saturé ou insaturé, de préférence le système cyclique pyridinium, qui peut contenir dans le cycle d'autres hétéroatomes, de préférence l'azote, l'oxygène, le soufre ou une de leurs combinaisons, en particulier le système cyclique morpholinium, et le système cyclique pouvant être substitué et/ou modifié par condensation ou par pontage à d'autres systèmes cycliques, en particulier le système cyclique quinolinium.

**17.** Sel de polysulfone-diallylammonium selon au moins l'une des revendications 12 à 16, caractérisé en ce que les composants diallylammonium sont basés sur un ou plusieurs composés de formules (1) à (7) selon la revendication 8.

**18.** Procédé de préparation d'un sel de polysulfone-diallylammonium selon au moins l'une des revendications 12 à 17, caractérisé en ce que

a) on dissout un halogénure de polysulfone-diallylammonium dans l'eau ou dans un mélange d'eau et d'un solvant organique entièrement ou partiellement miscible à l'eau,
b) on ajoute à la solution préparée selon a) un ou plusieurs de(s) composé(s) de base de l'anion A, à une température comprise entre 0 °C et 100 °C et une valeur de pH comprise entre 3 et 10, et
c) ensuite, on précipite le sel de polysulfone-diallylammonium obtenu éventuellement par dessalage avec un sel halogéné,
d) on élimine essentiellement les sels inorganiques à partir du sel de polysulfone-diallylammonium précipité et ensuite
e) on sèche sous vide à température élevée.